# EUROPÄISCHE PATENTANMELDUNG

(11) **EP 2 113 682 A2**
(43) Veröffentlichungstag der Anmeldung: **04.11.2009**
(21) Anmeldenummer: 09158423.5
(22) Anmeldetag: 22.04.2009
(51) Int. Cl.: F16F 15/121, F16F 15/16

(54) **Torsionsschwingungsdämpferanordnung für den Antriebsstrang eines Fahrzeugs**

(30) Priorität: 30.04.2008 DE 102008001493
(71) Anmelder: ZF Friedrichshafen AG, 88038 Friedrichshafen (DE)
(72) Erfinder: Feldhaus, Reinhard, 97502 Euerbach (DE); Dögel, Thomas, 97688 Bad Kissingen (DE); Orlamünder, Andreas, 97453 Schonungen (DE); Fambach, Ralf, 97453 Schonungen (DE); Schade, Thomas, 97464 Niederwerrn (DE)

(57) **Zusammenfassung**

Eine Torsionsschwingungsdämpferanordnung, insbesondere für den Antriebsstrang eines Fahrzeugs, umfasst eine Primärseite (12) und eine gegen die Wirkung einer Dämpferanordnung bezüglich der Primärseite (12) um eine Drehachse (A) drehbare Sekundärseite (18), wobei die Dämpferanordnung wenigstens eine Fluiddruckspeicheranordnung (42, 44) sowie eine Förderanordnung (15) umfasst, durch welche bei Relativdrehung der Primärseite (12) bezüglich der Sekundärseite (18) der Fluidspeicherdruck in wenigstens einer Fluiddruckspeicheranordnung (42, 44) erhöhbar ist, wobei die wenigstens eine Fluiddruckspeicheranordnung an einer Seite von Primärseite (12) und Sekundärseite (18) wenigstens eine Fluiddruckspeichereinheit mit durch die Förderanordnung (15) förderbarem erstem Fluid und einem durch das erste Fluid belastbaren Energiespeicher (16) umfasst, wobei in einem Strömungsweg des ersten Fluids zu wenigstens einem Energiespeicher (16) eine Drosselanordnung (60) mit veränderbarem Drosselverhalten vorgesehen ist.

## Beschreibung

Die vorliegende Erfindung betrifft eine Torsionsschwingungsdämpferanordnung, insbesondere für den Antriebsstrang eines Fahrzeugs, umfassend eine Primärseite und eine gegen die Wirkung einer Dämpferanordnung bezüglich der Primärseite um eine Drehachse drehbare Sekundärseite, wobei die Dämpferanordnung wenigstens eine Fluiddruckspeicheranordnung sowie eine Förderanordnung umfasst, durch welche bei Relativdrehung der Primärseite bezüglich der Sekundärseite der Fluidspeicherdruck in wenigstens einer Fluiddruckspeicheranordnung erhöhbar ist, wobei die wenigstens eine Fluiddruckspeicheranordnung an einer Seite von Primärseite und Sekundärseite wenigstens eine Fluiddruckspeichereinheit mit durch die Förderanordnung förderbarem erstem Fluid und einem durch das erste Fluid belastbaren Energiespeicher umfasst.

Derartige Torsionsschwingungsdämpferanordnungen dienen beispielsweise im Antriebsstrang von Fahrzeugen dazu, im Drehmomentübertragungsweg zwischen einem Antriebsaggregat und einem Getriebe Drehungleichförmigkeiten, wie z.B. Lastwechselschwingungen oder die von einer als Antriebsaggregat eingesetzten Brennkraftmaschine mit den periodischen Zündungen erzeugten Schwingungsanregungen zu dämpfen bzw. deren Übertragung in den folgenden Antriebsstrang zu verhindern. Dabei haben sich als so genannte Gasfeder-Torsionsschwingungsdämpfer ausgebildete Anordnungen als besonders vorteilhaft erwiesen, da sie in einem großen Spektrum von Schwingungsanregungen eine hervorragende Dämpfungseigenschaft haben. Insbesondere besteht bei Gasfeder-Torsionsschwingungsdämpfern die Möglichkeit, durch eine Drehdurchführung hindurch in einen rotierenden Systembereich erstes, im Allgemeinen inkompressibles Fluid, wie z.B. Öl nachzuspeisen, um damit die Druckverhältnisse und somit auch die Härte des Dämpfers an aktuelle Schwingungszustände anzupassen. Wenn dabei eine größere Anzahl an Druckspeichern wirkt, um die durch Erhöhung des Drucks des ersten Fluids eingeführte Energie aufzunehmen und somit den Dämpfer härter zu machen, ist es jedoch erforderlich, vergleichsweise große Volumenströme innerhalb kurzer Zeit über die Drehdurchführung zuzuführen, was ein entsprechend langsames Ansprechverhalten mit sich bringt.

Es ist daher die Aufgabe der vorliegenden Erfindung, einen Torsionsschwingungsdämpfer, insbesondere für den Antriebsstrang eines Fahrzeugs vorzusehen, welcher besser und schneller an aktuelle Betriebszustände anpassbar ist.

Erfindungsgemäß wird diese Aufgabe gelöst durch eine Torsionsschwingungsdämpferanordnung, insbesondere für den Antriebsstrang eines Fahrzeugs, umfassend eine Primärseite und eine gegen die Wirkung einer Dämpferanordnung bezüglich der Primärseite um eine Drehachse drehbare Sekundärseite, wobei die Dämpferanordnung wenigstens eine Fluiddruckspeicheranordnung sowie eine Förderanordnung umfasst, durch welche bei Relativdrehung der Primärseite bezüglich der Sekundärseite der Fluidspeicherdruck in wenigstens einer Fluiddruckspeicheranordnung erhöhbar ist, wobei die wenigstens eine Fluiddruckspeicheranordnung an einer Seite von Primärseite und Sekundärseite wenigstens eine Fluiddruckspeichereinheit mit durch die Förderanordnung förderbarem erstem Fluid und einem durch das erste Fluid belastbaren Energiespeicher umfasst, wobei in einem Strömungsweg des ersten Fluids zu wenigstens einem Energiespeicher eine Drosselanordnung mit veränderbarem Drosselverhalten vorgesehen ist.

Durch die Möglichkeit, das Druckspeicherverhalten von einem oder ggf. mehreren Druckspeichern durch eine schaltbare Drosselanordnung beeinflussen zu können, kann in Fällen, in welchen beispielsweise eine höhere Steifigkeit der Torsionsschwingungsdämpferanordnung erforderlich ist und dazu auch über eine Drehdurchführung von außen unter Druck stehendes erstes Fluid zugeführt wird, ein derartiger Druckspeicher abgekoppelt werden, so dass dieser nicht zur Elastizität beiträgt bzw. durch die Abkopplung eines Druckspeichers die Torsionsschwingungsdämpferanordnung allgemein härter wird. Entsprechend kann durch Zukoppeln eines derartigen Druckspeichers und somit auch Zukoppeln der Möglichkeit, Energie aufnehmen zu können, die Torsionsschwingungsdämpferanordnung weicher gemacht werden, wodurch die Entkopplungsgüte zwischen Primärseite und Sekundärseite verbessert wird.

Der Effekt der erfindungsgemäßen Schaltbarkeit eines Druckspeichers kann dadurch besonders effizient und variabel genutzt werden, dass wenigstens eine Fluiddruckspeicheranordnung eine Mehrzahl von Energiespeichern mit diesen zugeordneten Drosselanordnungen aufweist und dass die Energiespeicher durch die zugeordneten Drosselanordnungen parallel schaltbar sind.

Bei einer alternativen Ausgestaltungsvariante kann vorgesehen sein, dass wenigstens eine Drosselanordnung ein durch eine Antriebseinheit stellbares Drosselelement umfasst.

Um das Drosselverhalten in einfacher Weise beeinflussen zu können, wird vorgeschlagen, dass wenigstens eine Drosselanordnung ein durch eine Antriebseinheit stellbares Drosselelement umfasst.

Dabei kann beispielsweise das Drosselelement durch die zugeordnete Antriebseinheit verschiebbar oder drehbar sein. Auch eine Verformbarkeit des Drosselelements durch die zugeordnete Antriebseinheit und damit das mehr oder weniger starke Verschließen beispielsweise einer Drosselöffnung ist eine Ausgestaltungsmöglichkeit.

Um zur Veränderung der Drosselwirkung ein Drosselelement bewegen und damit verstellen zu können, kann bei einer insbesondere auch hinsichtlich der genauen Stellbarkeit vorteilhaften Ausgestaltungsform vorgesehen sein, dass wenigstens eine Antriebseinheit durch elektrische oder/und magnetische Wechselwirkung zum Stellen des Drosselelements wirkt. Dabei kann vorgesehen sein, dass wenigstens eine Antriebseinheit in Zuordnung zu einer Drosselanordnung an der einen Seite von Primärseite und Sekundärseite eine Elektromagnetanordnung umfasst.

Um eine elektrisch zu erregende bzw. anzusteuernde Antriebseinheit erregen bzw. aktivieren zu können, wird weiter vorgeschlagen, dass wenigstens eine Antriebseinheit durch Schleifkontakt oder Induktion mit Antriebssignalen oder/und elektrischer Antriebsenergie versorgbar ist.

Bei einer auch hinsichtlich der einfachen baulichen Ausgestaltung vorteilhaften Variante kann vorgesehen sein, dass wenigstens eine Antriebseinheit in einem nicht rotierenden Systembereich angeordnet ist und zur Erzeugung einer magnetischen oder/und elektrischen Wechselwirkung mit einem Wechselwirkungsbereich von einer oder mehreren Drosselanordnungen ausgebildet ist.

Auch dabei kann wenigstens eine Antriebseinheit wenigstens eine Elektromagnetanordnung umfassen. Bei einer alternativen Variante kann vorgesehen sein, dass wenigstens eine Antriebseinheit wenigstens einen zur Erzeugung einer magnetischen Wechselwirkung vorzugsweise verlagerbaren Permanentmagneten umfasst.

Bei einer weiteren Alternative zur Betätigung eines Drosselelements wird vorgeschlagen, dass wenigstens eine Antriebseinheit einen eine Antriebskraft aus einer Relativdrehung zwischen der Primärseite und der Sekundärseite ableitenden mechanischen Antrieb umfasst. Da bei dieser Ausgestaltung der Ansteuerung die Relativdrehung zwischen der Primärseite und der Sekundärseite zu Grunde liegt, wird es möglich, in einfacher Weise immer den aktuellen Betriebszustand der Torsionsschwingungsdämpferanordnung zur Einstellung des Drosselverhaltens zu nutzen.

Dabei kann beispielsweise vorgesehen sein, dass der mechanische Antrieb als Nockentrieb ausgebildet ist.

Alternativ kann vorgesehen sein, dass der mechanische Antrieb als Hebeltrieb ausgebildet ist.

Eine weitere Möglichkeit, ein Drosselelement zum Beeinflussen des Drosselverhaltens zu verstellen, kann dadurch realisiert sein, dass wenigstens eine Antriebseinheit als Druckfluidantrieb ausgebildet ist.

Bei einer weiteren Variante wird vorgeschlagen, dass wenigstens eine Antriebseinheit ein in Abhängigkeit von einer Temperatur des ersten Fluids verformbares Bimetallantriebselement umfasst.

Eine weitere Möglichkeit, die Strömung des ersten Fluids und somit das Drosselverhalten einer Drosselanordnung zu beeinflussen, besteht darin, dass das erste Fluid magneto-rheologisch oder/und elektro-rheologisch ist und dass wenigstens eine Drosselanordnung eine Vorrichtung zur Erzeugung eines elektrischen Feldes oder/und magnetischen Feldes im Strömungsweg des ersten Fluids umfasst. Diese Variante ist daher besonders vorteilhaft, da keine zu bewegenden Bauteile erforderlich sind, um die Variation des Drosselverhaltens zu erlangen und somit einerseits die Gefahr eines Verschleißes bzw. einer mechanischen Fehlfunktion ausgeschlossen werden kann, andererseits auch eine Beeinflussung des Stellverhaltens, beispielsweise durch Fliehkräfte, nicht auftreten wird.

Bei einer weiteren alternativen Ausgestaltungsvariante zur Beeinflussung des Drosselverhaltens wird vorgeschlagen, dass wenigstens eine Drosselanordnung ein in Abhängigkeit von einer Drehbeschleunigung der Primärseite oder/und der Sekundärseite stellbares Drosselelement umfasst.

Hierzu kann beispielsweise vorgesehen sein, dass dem Drosselelement eine dieses in wenigstens einer Stellrichtung periodisch beaufschlagende Antriebseinheit zugeordnet ist. Diese periodische Beaufschlagung kann beispielsweise dadurch erlangt werden, dass die Antriebseinheit wenigstens ein näherungsweise in einer Umfangsrichtung entgegen einer Rückstellkraft bewegbares Antriebsmassenelement umfasst.

Um den bei Relativdrehung erzeugten erhöhten Druck des ersten Fluids und somit die im ersten Fluid auch aufgenommene Energie speichern zu können, wird vorgeschlagen, dass wenigstens ein Energiespeicher komprimierbares zweites Fluid, vorzugsweise Gas, in einem Speichervolumen umfasst. Die Kompression von Gas hat sich auf Grund des dadurch erzielbaren Dämpfungsverhaltens als besonders vorteilhaft erwiesen. Es sei darauf hingewiesen, dass die Energiespeicher selbstverständlich auch andere Medien zur Speicherung von Energie, repräsentiert auch durch einen Druckanstieg im ersten Fluid, nutzen können. So kann beispielsweise ein Energiespeicher auch eine oder mehrere Federn, beispielsweise Schraubendruckfedern oder komprimierbare Festkörper, wie z.B. Elastomerblöcke oder dergleichen, nutzen. Selbstverständlich ist es auch möglich, verschiedene Energiespeichermedien, wie z.B. eine Feder und ein komprimierbares Fluid, wie z.B. Gas, zu kombinieren.

Um mit der erfindungsgemäßen Torsionsschwingungsdämpferanordnung Schwingungen in beiden Relativdrehrichtungen zwischen der Primärseite und der Sekundärseite abfangen zu können, also sowohl im Zugbetrieb, d.h. bei Drehmomenteinleitung über die Primärseite und Drehmomentableitung über die Sekundärseite, als auch im Schubbetrieb, d.h. Drehmomenteinleitung über die Sekundärseite und Drehmomentableitung über die Primärseite, wirksam zu sein, wird weiter vorgeschlagen, dass zwei Fluiddruckspeicheranordnungen vorgesehen sind und dass bei Relativdrehung der Primärseite bezüglich der Sekundärseite in einer ersten Relativdrehrichtung die Förderanordnung den Fluidspeicherdruck in einer ersten der Fluiddruckspeicheranordnung erhöht und bei Relativdrehung der Primärseite bezüglich der Sekundärseite in einer der ersten Relativdrehrichtung entgegengesetzten zweiten Relativdrehrichtung den Fluidspeicherdruck in einer zweiten der Fluiddruckspeicheranordnungen erhöht.

Dabei kann beispielsweise vorgesehen sein, dass die Förderanordnung eine durch Relativdrehung der Primärseite bezüglich der Sekundärseite antreibbare Pumpanordnung umfasst, welche in Abhängigkeit von der Relativdrehrichtung erstes Fluid von einer der Fluiddruckspeicheranordnungen zur anderen Fluiddruckspeicheranordnung fördert.

Hier sind insbesondere ohne Drehwinkelbegrenzung arbeitende Pumpanordnungen, wie z.B. Zahnradpumpen oder dergleichen vorteilhaft, da sie eine sehr weiche Dämpfercharakteristik ohne der Gefahr, dass die Primärseite und die Sekundärseite in gegenseitigen Anschlag kommen, ermöglichen.

Bei einer alternativen Ausgestaltungsvariante kann vorgesehen sein, dass die Förderanordnung wenigstens eine zwischen der Primärseite und der Sekundärseite gebildete Druckkammer umfasst, deren Volumen bei Relativdrehung der Primärseite bezüglich der Sekundärseite veränderbar ist, sowie wenigstens ein Verbindungsvolumen umfasst, über welches aus der wenigstens einen Druckkammer verdrängtes erstes Fluid wenigstens einen Energiespeicher belastet.

Die vorliegende Erfindung wird nachfolgend mit Bezug auf die beiliegenden Figuren detailliert beschrieben. Es zeigt:
- Fig. 1: eine Längsschnittansicht eines Drehmomentübertragungssystems mit einer Gasfeder-Torsionsschwingungsdämpferanordnung;
- Fig. 2: eine Querschnittansicht der in Fig. 1 erkennbaren Torsionsschwingungsdämpferanordnung;
- Fig. 3: die Variabilität der Durchflusskennlinien von Drosselanordnungen in Abhängigkeit verschiedenster Parameter;
- Fig. 4: im Querschnitt eine alternative Ausgestaltung einer Förderanordnung für eine Torsionsschwingungsdämpferanordnung;
- Fig. 5: eine alternative Ausgestaltung einer Förderanordnung im Querschnitt;
- Fig. 5a: die Förderanordnung der Fig. 5 im Längsschnitt;
- Fig. 5b: den Antrieb der Förderanordnung der Fig. 5 im Querschnitt;
- Fig. 6: eine Schnittdarstellung einer im Strömungsweg des ersten Fluids angeordneten Drosselanordnung, geschnitten in Längsrichtung eines drehbaren Drosselelements;
- Fig. 7: eine Antriebseinheit der in Fig. 6 gezeigten Drosseleinheit, geschnitten längs einer Linie VII - VII in Fig. 6;
- Fig. 8: eine der Fig. 6 entsprechende Darstellung der Drosselanordnung in einem anderen Stellzustand;
- Fig. 9: eine Querschnittansicht der Antriebseinheit der Drosselanordnung im Stellzustand der Fig. 8, geschnitten längs einer Linie IV - IV in Fig. 8;
- Fig. 10: eine Schnittansicht einer alternativ ausgestalteten Drosselanordnung;
- Fig. 11: eine der Fig. 10 entsprechende Ansicht der Drosselanordnung in einem anderen Stellzustand;
- Fig. 12: eine weitere der Fig. 10 entsprechende Ansicht der Drosselanordnung in einem anderen Stellzustand;
- Fig. 13: eine Schnittansicht einer Drosselanordnung mit verformbarem Drosselelement;
- Fig. 14: die Drosselanordnung der Fig. 13 in einem anderen Stellzustand;
- Fig. 15: die Drosselanordnung der Fig. 13 in einem anderen Stellzustand;
- Fig. 16: eine der Fig. 2 entsprechende Darstellung einer Torsionsschwingungsdämpferanordnung mit einer alternativen Ausgestaltungsart von Drosselanordnungen;
- Fig. 17: eine zum Teil perspektivisch dargestellte Schnittansicht einer Drosselanordnung zum Erläutern des Funktionsprinzips der in Fig. 16 erkennbaren Drosselanordnungen;
- Fig. 18: die in Fig. 17 gezeigte Drosselanordnung in einem anderen Stellzustand;
- Fig. 19: eine Teil-Längsschnittansicht einer Torsionsschwingungsdämpferanordnung mit einem mechanischen Antrieb für ein Drosselelement;
- Fig. 20: eine Teil-Querschnittansicht der Torsionsschwingungsdämpferanordnung der Fig. 19;
- Fig. 21: eine der Fig. 20 entsprechende Ansicht in einem anderen Stellzustand einer Drosselanordnung;
- Fig. 22: eine der Fig. 19 entsprechende Teil-Längsschnittansicht einer Torsionsschwingungsdämpferanordnung mit einer Drosselanordnung mit mechanischem Antrieb gemäß einer alternativen Ausgestaltungsvariante;
- Fig. 23: eine Teil-Querschnittansicht der Torsionsschwingungsdämpferanordnung in Fig. 22;
- Fig. 24: eine der Fig. 23 entsprechende Darstellung in einem anderen Stellzustand der Drosselanordnung;
- Fig. 25: eine Schnittdarstellung einer alternativ ausgestalteten Drosselanordnung;
- Fig. 26: die Drosselanordnung in Fig. 25 in einem anderen Stellzustand;
- Fig. 27: die Drosselanordnung der Fig. 25 in einem anderen Stellzustand;
- Fig. 28: eine der Fig. 25 entsprechende Ansicht einer abgewandelten Ausgestaltungsvariante einer Drosselanordnung;
- Fig. 29: die Drosselanordnung der Fig. 28 in einem anderen Stellzustand;
- Fig. 30: eine Teil-Querschnittansicht einer Torsionsschwingungsdämpferanordnung, welche die in Fig. 28 dargestellte Drosselanordnung aufweist;
- Fig. 31: eine der Fig. 30 entsprechende Darstellung in einem anderen Stellzustand der Drosselanordnung;
- Fig. 32: eine der Fig. 2 entsprechende Querschnittdarstellung einer Torsionsschwingungsdämpferanordnung mit induktiver Ansteuerung von Drosselanordnungen;
- Fig. 33: eine der Fig. 32 entsprechende Darstellung mit durch einen Beschleunigungsschalter schaltbaren Drosselanordnungen;
- Fig. 34: einen Beschleunigungsschalter der in Fig. 33 gezeigten Ausgestaltungsform in einem Schließzustand,
- Fig. 35: einen Beschleunigungsschalter in einem Offenzustand;
- Fig. 36: eine weitere der Fig. 2 entsprechende Querschnittdarstellung einer Torsionsschwingungsdämpferanordnung mit zwei alternativen Ausgestaltungsarten von Drosselanordnungen;
- Fig. 37: eine blockbildartige Darstellung einer Torsionsschwingungsdämpferanordnung mit seriell geschalteten Energiespeichern an der Primärseite;
- Fig. 38: eine der Fig. 37 entsprechende Darstellung mit parallel geschalteten Energiespeichern an der Primärseite.

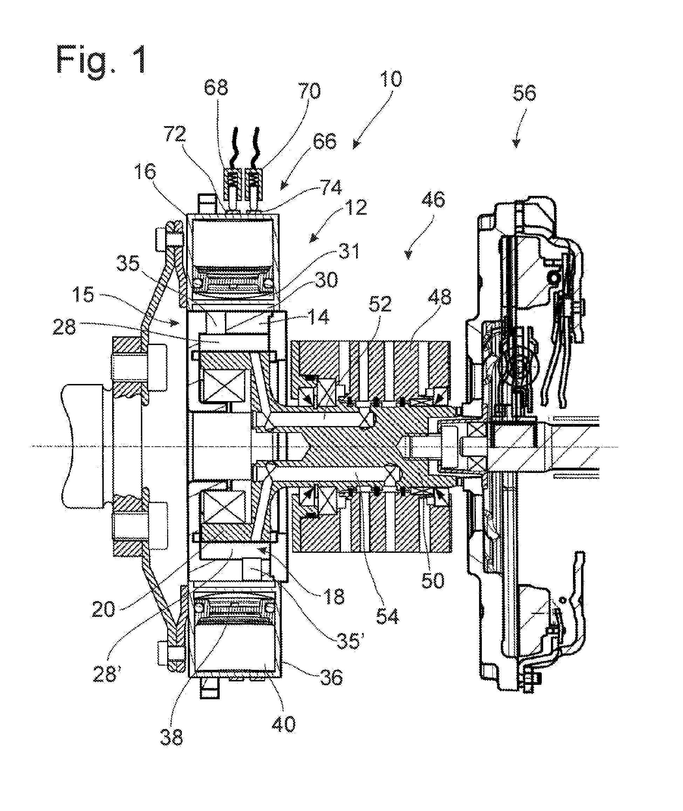

Die Fig. 1 zeigt im Querschnitt, bezogen auf eine Drehachse A, eine Torsionsschwingungsdämpferanordnung 10, welche nach Art eines Gasfeder-Torsionsschwingungsdämpfers aufgebaut ist. Eine Primärseite 12 dieser Torsionsschwingungsdämpferanordnung 10 umfasst ein äußeres Gehäuse 14, mit welchem drehfest eine Vielzahl sternförmig um die Drehachse A herum angeordneter und als Druckspeicher wirksamer Gasfedereinheiten 16 gekoppelt ist. Eine Sekundärseite 18 der Torsionsschwingungsdämpferanordnung 10 umfasst ein inneres Gehäuseteil 20, welches bezüglich des äußeren Gehäuseteils 14 um die Drehachse A grundsätzlich drehbar ist. Das äußere Gehäuseteil 14 weist zwei nach radial innen sich erstreckende, flügelartige Wandungen 22, 22' auf. Entsprechend weist das radial innere Gehäuseteil 20 zwei nach radial außen sich erstreckende flügelartige Wandungen 24, 24' auf. Die Wandungen 22, 22', 24, 24' liegen unter Einsatz jeweiliger Dichtungselemente nach radial innen bzw. radial außen fluiddicht am jeweiligen anderen Gehäuseteil an, so dass in Umfangsrichtung vier Druckkammern 26, 28, 26', 28' gebildet sind. Diese sind selbstverständlich in axialer Richtung durch Abschlusselemente fluiddicht abgeschlossen, die vorzugsweise an der Primärseite 12, also dem äußeren Gehäuseteil 14, angeordnet sind.

Zwischen den Gasfedereinheiten 16 und dem äußeren Gehäuseteil 14 sind zwei ringartige Zwischenräume 30, 31 gebildet. Der erste Ringraum 31 ist in vier Verbindungskammern 32, 32', 34, 34' unterteilt. Die Verbindungskammer 32 ist dabei der Druckkammer 26 zugeordnet und mit dieser über eine Öffnung 33 in Fluidaustauschverbindung. Die Verbindungskammer 32' ist entsprechend der Druckkammer 26' zugeordnet und über eine Öffnung 33' mit dieser verbunden. Die Verbindungskammer 34 ist über eine Öffnung 35 der Druckkammer 28 zugeordnet, und die Verbindungskammer 34' ist über eine Öffnung 35' der Verbindungskammer 28' zugeordnet. Bei Relativdrehung zwischen der Primärseite 12 und der Sekundärseite 18 ausgehend von einer Neutral-Relativdrehlage verringert sich das Volumen beispielsweise der im Zugzustand belasteten Druckkammern 26, 26', und darin enthaltenes, im Wesentlichen inkompressibles erstes Fluid, also beispielsweise Öl, wird über die Öffnungen 33, 33' in die zugehörigen Verbindungskammern 32, 32' verdrängt. Bei Relativdrehung in der anderen Richtung wird aus den beispielsweise dann im Schubzustand belasteten Druckkammern 28, 28' erstes Fluid über die Öffnungen 35, 35' in die zugeordneten Verbindungskammern 34, 34' verdrängt.

Jede der Gasfedereinheiten 16 umfasst einen Zylinder 36 und einen darin radial verschiebbaren Trennkolben 38 als Trennelement. Die Volumina 40 der Zylinder 36 sind mit einem kompressiblen zweiten Fluid, also beispielsweise Gas, gefüllt. Bei Druckanstieg in einer jeweiligen Verbindungskammer 32, 32', 34, 34' werden die mit dieser Verbindungskammer zusammenwirkenden Gasfedereinheiten 16 verstärkt belastet, so dass durch radiale Verschiebung der jeweiligen Trennkolben 38 das in den Volumina 40 enthaltene zweite Fluid komprimiert wird. Dabei wird durch den erhöhten Druck eine Rückstellkraft erzeugt, welche die Primärseite 14 und die Sekundärseite 18 in ihre Neutral-Relativdrehlage bezüglich einander vorspannt. Der radial äußere zweite Ringraum 31 ist der Anzahl an Gasfedereinheiten 16 entsprechend in eine Mehrzahl von Anschlusskammern 37 unterteilt, wobei jeder Gasfedereinheit 16 eine derartige Anschlusskammer 37 zugeordnet ist. Die mit einer jeweiligen Druckkammer zusammenwirkenden Gasfedereinheiten 16 bzw. deren Anschlusskammern 37 sind über jeweilige Öffnungen 39 in Verbindung mit der der fraglichen Druckkammer zugeordneten und radial innerhalb dieser Anschlusskammern liegenden Verbindungskammer.

Man erkennt aus der vorangehenden Beschreibung, dass bei der Torsionsschwingungsdämpferanordnung 10 zwei Fluiddruckspeicheranordnungen 42, 44 vorgesehen sind. Eine erste davon umfasst die beiden parallel wirksamen Druckkammern 26, 26', die diesen zugeordneten Verbindungskammern 32, 32' und alle mit diesen Verbindungskammern 32, 32' zusammenwirkenden bzw. diese auch nach radial außen begrenzenden Gasfedereinheiten 16. Der Speicherdruck dieser ersten Fluiddruckspeicheranordnung 42 wird beispielsweise dann erhöht, wenn ein Antriebssystem im Zugzustand ist, also ein Drehmoment von einem Antriebsaggregat auf angetriebene Räder übertragen wird. Die zweite Fluiddruckspeicheranordnung 44 umfasst entsprechend die Druckkammer 28, 28', die Verbindungskammern 34, 34' sowie die beiden mit diesen Verbindungskammern 34, 34' zusammenwirkenden Gasfedereinheiten 36. Diese zweite Fluiddruckspeicheranordnung 44 kann im Schubzustand, also beispielsweise einem Motorbremszustand, wirksam sein.

Soll die Torsionsschwingungsdämpferanordnung 10 nur in einem dieser beiden Zustände, also Schubzustand oder Zugzustand, wirksam sein, so kann der Ringraum 30 in Umfangsrichtung ununterbrochen ausgebildet sein, so dass alle Gasfedereinheiten 16 mit den beiden in diesem Zustand dann in ihrem Volumen verringerten Druckkammern zusammenwirken können. Die beiden anderen Druckkammern sind durch Öffnungen zur Umgebung hin offen.

Es sei darauf hingewiesen, dass bei der in Fig. 1 dargestellten Ausgestaltungsform der Torsionsschwingungsdämpferanordnung 10 die beiden Gehäuseteile 14, 20 eine Fluidförderanordnung 15 bilden, mit welcher abhängig von der Relativdrehrichtung erstes Fluid wahlweise in eine der Fluiddruckspeicheranordnungen 42, 44 geleitet wird. Konstruktionsbedingt weist diese Förderanordnung 15 einen begrenzten Winkel-Arbeitsbereich auf, der im dargestellten Beispiel bei etwas unter 90° liegt.

Man erkennt in der Fig. 1 eine allgemein mit 46 bezeichnete Drehdurchführung mit einem stationären, also an einer nicht rotierenden Baugruppe, wie beispielsweise einer Getriebeglocke oder dergleichen festgelegten nicht rotierenden Bereich 48 und einem mit der Sekundärseite 18 rotierenden Bereich 50, der beispielsweise mit dem Gehäuseteil 20 integral ausgebildet sein kann. In diesem radial inneren Gehäuseteil 20 bzw. dem rotierenden Bereich 50 der Drehdurchführung 46 sind grundsätzlich zwei Strömungswege 52, 54 vorgesehen, wobei beispielsweise der Strömungsweg 52 den beiden Druckkammern 26, 26' zugeordnet sein kann und der Strömungsweg 54 den beiden Druckkammern 28, 28' zugeordnet sein kann. Über die Drehdurchführung können also, wie nachfolgend auch erläutert, die jeweiligen Paare von Druckkammern wahlweise in Verbindung mit einer Quelle für unter Druck stehendes erstes, also im Wesentlichen inkompressibles Fluid gebracht werden, abgeschlossen werden oder in Verbindung mit einem im Wesentlichen drucklosen Fluidreservoir gebracht werden. Hierzu weist der nicht rotierende Bereich 48 entsprechende Anschlusskanäle auf.

Dem Drehmomentenfluss folgend auf die Sekundärseite 18 bzw. den rotierenden Bereich 50 der Drehdurchführung 46 ist in dem in Fig. 1 dargestellten Beispiel ein Anfahrelement 56 in Form einer Reibungskupplung vorgesehen. Es ist selbstverständlich, dass zur Drehmomentübertragung hier andere Baugruppen, wie z.B. eine nasslaufende Reibungskupplung, ein hydrodynamischer Drehmomentwandler oder dergleichen, vorgesehen sein kann.

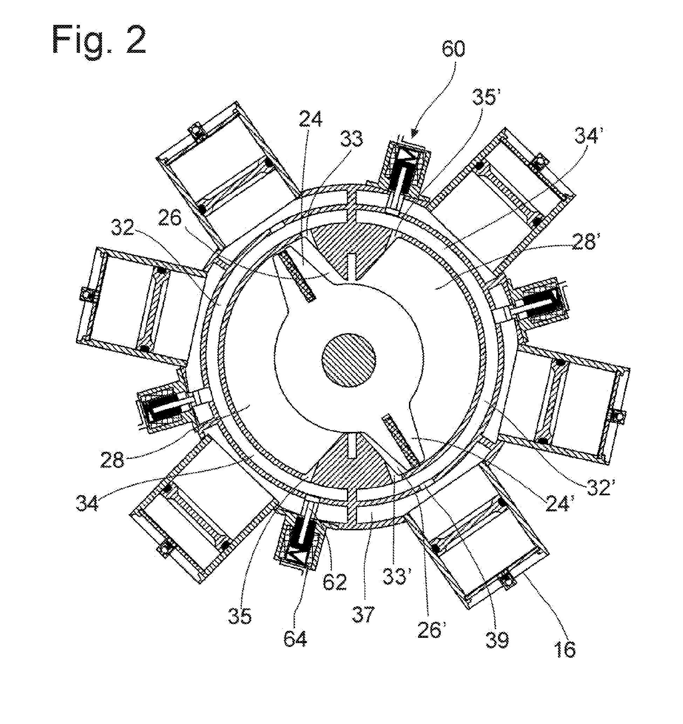

In Fig. 2 erkennt man in Zuordnung zu vier der Gasfedereinheiten 16 bzw. der diesen jeweils zugeordneten Anschlusskammern 37 Drosselanordnungen 60. Diese hier im Wesentlichen ventilartig ausgestalteten Drosselanordnungen 60 umfassen jeweils ein verschiebbares Drosselelement 62, durch welches der Strömungsquerschnitt einer jeweiligen Öffnung 39 mehr oder weniger stark gedrosselt bzw. auch vollständig abgeschlossen werden kann. Jedes Drosselelement 62 ist durch eine hier elektromagnetisch wirksame Antriebseinheit 64 mit einer in einem Gehäuse angeordneten Spule und einem mit dem Drosselelement 62 gekoppelten Anker ausgebildet. Entgegen der Vorspannwirkung einer jeweiligen Rückstellfeder können die Drosselelemente 62 in eine Offenstellung gebracht werden, in welcher sie, wie beispielsweise anhand der rechts und links liegenden Drosselanordnungen 60 erkennbar, die zugeordneten Öffnungen 39 frei geben. Bei nicht erregter Antriebseinheit 64 sind die Drosselelemente 62 bedingt durch die Federvorspannung in einer Schließstellung, in welcher sie die zugeordneten Öffnungen 39 vollständig abschließen. In diesem Zustand ist dann die über eine derartige Öffnung 39 grundsätzlich versorgte bzw. durch das erste Fluid belastbare Gasfedereinheit 16 von der zugeordneten Verbindungskammer und somit auch der zugeordneten Druckkammer abgekoppelt. Eine Druckerhöhung in der Druckkammer kann somit nicht zu einer entsprechenden Belastung oder verstärkten Belastung einer Gasfedereinheit 16 führen, was die Dämpfungscharakteristik, primär die Möglichkeit, Energie in den Gasfedereinheiten zu speichern, erheblich beeinflusst.

Man erkennt in der Fig. 2, dass nicht allen Gasfedereinheiten 16 derartige Drosselanordnungen zugeordnet sind. Die links oben und die rechts unten angeordneten Gasfedereinheiten 16 sind, über ihre zugeordneten Anschlusskammern 37 und die Öffnungen 39 permanent in Verbindung mit den entsprechenden Verbindungskammern und Druckkammern, so dass hier eine Parallelwirkung von wahlweise zu- bzw. abschaltbaren Gasfedereinheiten 16 und nicht schaltbaren Gasfedereinheiten 16 realisiert ist.

Die Versorgung der verschiedenen Drosselanordnungen 60 mit elektrischer Energie kann über eine in der Fig. 1 erkennbare Schleifkontaktanordnung 66 mit zwei stationären Schleifkontakten 68, 70 und zwei Schleifkontaktbahnen 72, 74 am Außenumfang der Torsionsschwingungsdämpferanordnung 10 realisiert sein. Über diese Schleifkontaktbahnen 72, 74 können dann die verschiedenen Spulen der Drosselanordnung 60 mit elektrischer Energie versorgt werden. Hier können alle Spulen bzw. Drosselanordnungen 60 parallel über die beiden Schleifkontaktbahnen 72, 74 versorgt werden, so dass bei entsprechender Erregung auch alle Drosselanordnungen 60 gleichermaßen verstellt werden. Es ist jedoch auch möglich, in Zuordnung zu einzelnen oder mehreren Drosselanordnungen 60 auch jeweilige Schleifkontaktanordnungen 66 vorzusehen, so dass die verschiedenen Drosselanordnungen 60 auch separat zum Zu- bzw. Abkoppeln bzw. Drosseln der Wirksamkeit verschiedener Gasfedereinheiten 16 angesteuert werden können.

Es sei hier weiter darauf hingewiesen, dass die dargestellte einseitige Wirksamkeit der Elektromagnetanordnungen der verschiedenen Antriebseinheiten 64 auf Grund der baulich einfachen Ausgestaltung und auf Grund des einfachen Ansteuerns vorteilhaft ist. Selbstverständlich können auch in beiden Richtungen wirksame Elektromagnetanordnungen vorgesehen sein. Auch ist es möglich, die Rückstellung der Drosselelemente 62 in ihre Offenstellung beispielsweise durch Fliehkraft zu realisieren.

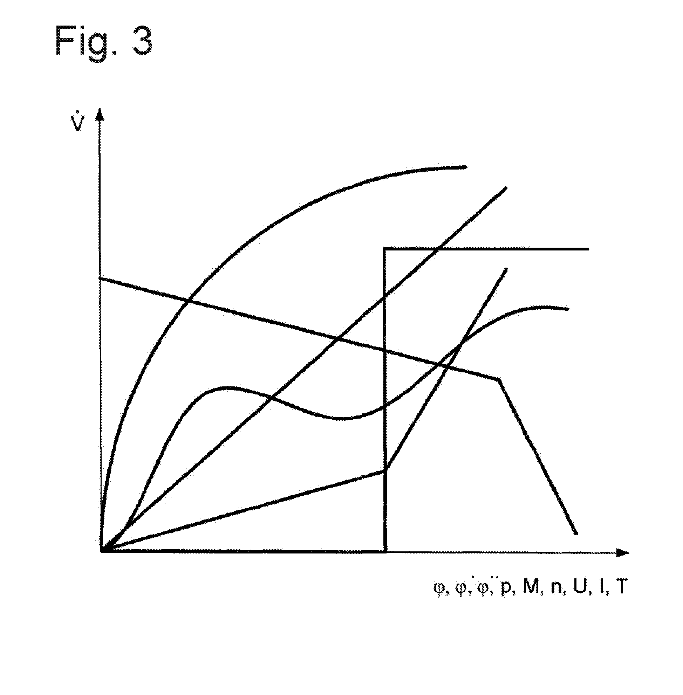

Die Fig. 3 zeigt verschiedene Beispiele von Kennlinien, welche den Volumenstrom des ersten Fluids über eine jeweilige Drosselanordnung 60 hinweg in Abhängigkeit verschiedenster Parameter, wie z.B. dem Relativdrehwinkel zwischen Primärseite und Sekundärseite, der Relativdrehgeschwindigkeit, der Relativdrehbeschleunigung, dem Druck in einer jeweiligen Verbindungskammer, dem über die Torsionsschwingungsdämpferanordnung übertragenen Drehmoment, der Drehzahl der Torsionsschwingungsdämpferanordnung an sich, der Spannung bzw. dem Strom in einem elektromagneto-rheologischen Fluid bzw. auch der Temperatur des Fluids eingestellt werden können. Durch Auswahl eines geeigneten Kennlinienverlaufs, wie z.B. linear, gestuft progressiv, degressiv, binär oder in beliebiger Weise nicht linear, wird es möglich, das Dämpfungsverhalten der Torsionsschwingungsdämpferanordnung 10 jeweils optimiert an im Fahrzustand auftretende Drehungleichförmigkeiten anzupassen. Insbesondere wird es möglich, mit steigendem zu übertragenden Drehmoment bzw. steigendem Relativdrehwinkel ein Anschlagen der Primärseite und der Sekundärseite gegeneinander, also der in Fig. 2 erkennbaren flügelartigen Wandungen, zu vermeiden.

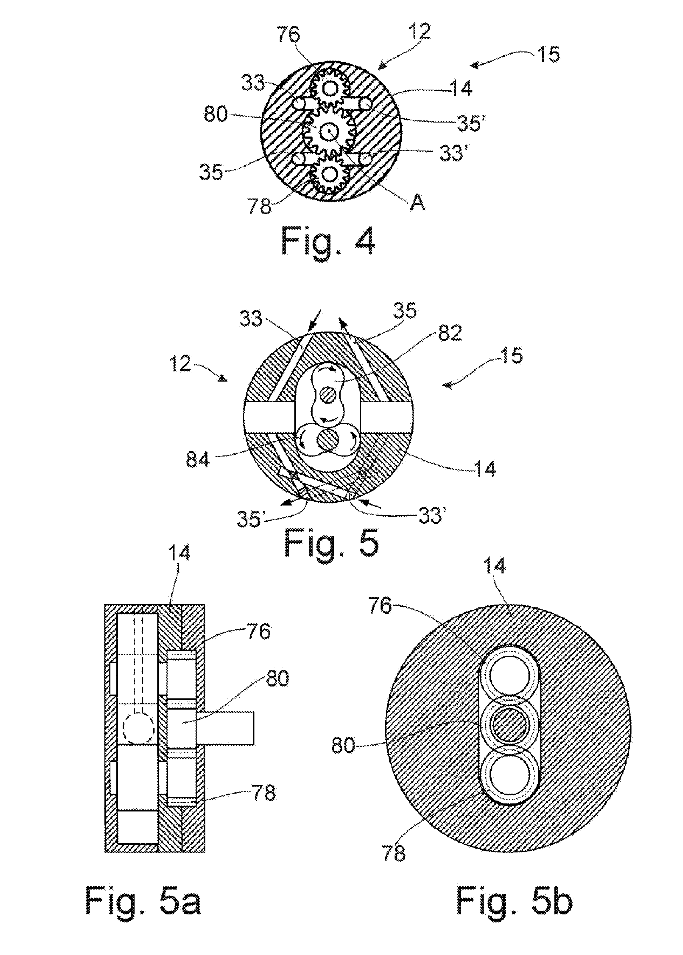

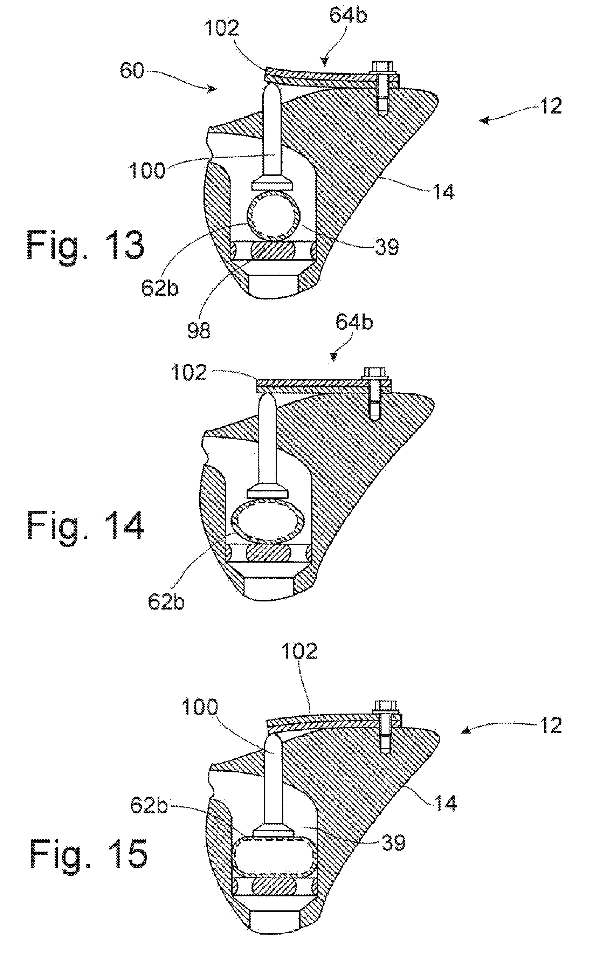

Die Fig. 4 zeigt eine alternative Ausgestaltungsart einer Fluidförderanordnung 15, welche in Abhängigkeit von der Relativdrehung zwischen der Primärseite 12 und der Sekundärseite 18 Fluid zwischen den beiden Fluiddruckspeicheranordnungen 42, 44 umwälzt. Die in Fig. 15 gezeigte Fluidförderanordnung 15 ist nach Art einer Zahnradpumpe aufgebaut und weist an der Primärseite 12, hier repräsentiert durch das Gehäuseteil 14, zwei daran drehbar getragene Zahnräder 76, 78 auf. Zwischen diesen ist zentral, auch zentrisch zur Drehachse A, ein Zahnrad 80 vorgesehen, welches der Sekundärseite 18 zuzuordnen ist, beispielsweise mit dem rotierenden Bereich 50 der Drehdurchführung 46 gekoppelt ist. Im Kämmbereich des zentralen Zahnrads 80 mit jedem der dezentral angeordneten Zahnräder 76, 78 ist ein Pumpbereich gebildet, welcher Fluid zwischen den jeweiligen Verbindungskammern, hier repräsentiert durch die zugeordneten Öffnungen 33, 33' bzw. 35, 35' fördert. Bei Relativdrehung zwischen Primärseite 12 und Sekundärseite 18 in einer ersten Relativdrehrichtung wird beispielsweise Fluid über die Öffnungen 33, 33' aus den diesen zugeordneten Verbindungskammern 32, 32' in die Öffnungen 35, 35' und somit die diesen zugeordneten Verbindungskammern 34, 34' gefördert. Diejenigen Verbindungskammern, welche erstes Fluid aufnehmen, erfahren also eine Druckerhöhung, so dass dort eine entsprechend verstärkte Belastung der zugeordneten Gasfedereinheiten auftreten wird.

Die in Fig. 4 dargestellte Ausgestaltungsart einer Fluidförderanordnung 15 weist den Vorteil auf, dass sie in einem Endlosdrehbereich arbeiten kann, was grundsätzlich die Einstellung einer vergleichsweise weichen Charakteristik ermöglicht, da das Gegeneinanderschlagen von Komponenten der Primärseite und der Sekundärseite hier nicht auftreten kann. Eine entsprechende Funktionalität wird bei der in den Fig. 5, 5a, 5b gezeigten weiteren alternativen Ausgestaltungsart einer Fluidförderanordnung 15 erreicht. Hier ist eine Drehkolbenpumpe mit zwei gegensinnig zueinander rotierenden Drehkolben 82, 84 vorgesehen, die an der Primärseite 12, beispielsweise wieder im Gehäuseteil 14 drehbar angeordnet sind. Der Antrieb dieser Drehkolben 82, 84 kann beispielsweise durch eine Formation erreicht werden, wie sie in der Ausgestaltungsform der Fig. 4 als Zahnradpumpe eingesetzt wird. Jeder der Drehkolben 82, 84 kann also mit einem der Zahnräder 76, 78 drehfest verbunden sein, die dann wieder durch das sekundärseitige zentrale Zahnrad 80 bei Relativdrehung zwischen der Primärseite 12 und der Sekundärseite 18 zur Drehung angetrieben werden. Auch die in der Fig. 5 erkennbare Fluidförderanordnung fördert Fluid beispielsweise über die Öffnungen 33, 33' in die Öffnungen 35, 35' oder umgekehrt, bei entsprechender umgekehrter Relativdrehung zwischen der Primärseite und der Sekundärseite.

Ein Vorteil der in Fig. 5 gezeigten Anordnung ist ein besseres Verhältnis zwischen Förderraumvolumen und Baugröße. Außerdem ist die gegenseitige Abdichtung zwischen der Hochdruckseite und der Niederdruckseite hier auf Grund der geringeren Anzahl der bezüglich einander zu dichtenden Oberflächen im Vergleich zu einer Zahnradpumpe leichter realisierbar.

Jede der beiden in den Fig. 4 und 5 gezeigten Ausgestaltungsvarianten einer Fluidförderanordnung kann selbstverständlich bei dem in Fig. 1 und 2 gezeigten Aufbau einer Torsionsschwingungsdämpferanordnung 10 an Stelle der mit Druckkammern und flügelartigen Wandungen realisierten Variante eingesetzt werden.

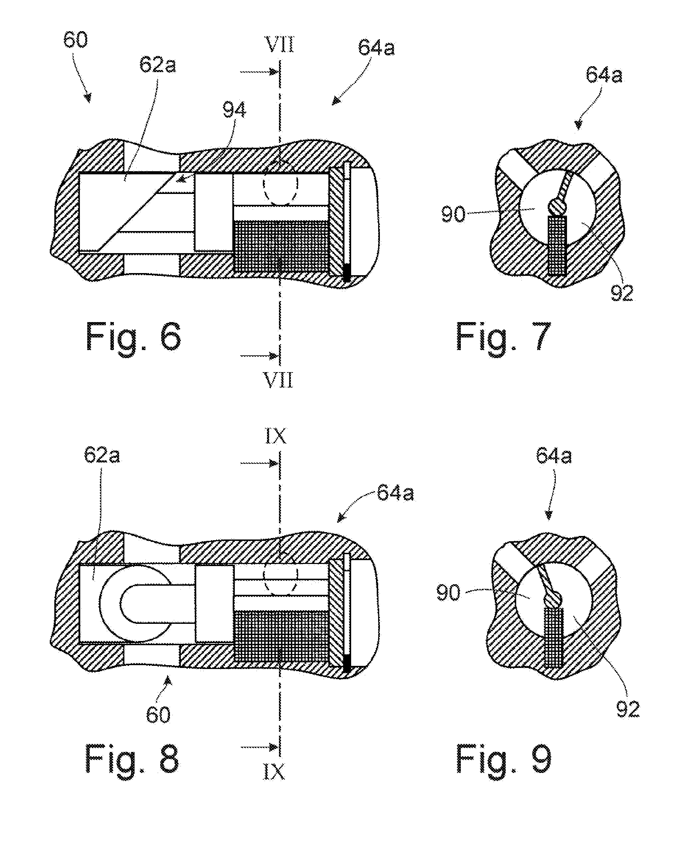

Die Fig. 6 zeigt eine alternative Ausgestaltungsart einer Drosselanordnung 60, hier mit einem drehbaren Drosselelement 62a. Diesem ist eine mit Druckfluid arbeitende Antriebseinheit 64a mit zwei mit Druckfluid, beispielsweise Öl oder einem Gas, versorgbaren Druckkammern 90, 92 zugeordnet. Durch Einstellung der Druckdifferenz in diesen beiden Druckkammern 90, 92 wird es möglich, ein Drehmoment zu erzeugen, welches das Drosselelement 62a zwischen der in Fig. 6 dargestellten Stellung mit maximaler Drosselwirkung und der in Fig. 8 dargestellten Stellung mit minimaler Drosselwirkung verstellt. Man erkennt auch, dass auch bei der maximalen Drosselwirkung noch ein geringer Durchflussbereich 94 verbleibt, über welchen auch in diesem Zustand noch eine geringe Menge des ersten Fluids strömen kann, um zumindest eine Minimalfunktionalität einer zugeordneten Gasfedereinheit 16 zu realisieren. Selbstverständlich könnte in dem in Fig. 6 dargestellten Zustand der Strömungsweg zur zugeordneten Gasfedereinheit 16 auch vollständig abgeschlossen werden.

Durch die Ausgestaltung des Kopfbereichs 96 des Drosselelements 62a mit der abgeschrägten Konfiguration, insbesondere durch die Auswahl des Neigungswinkels bzw. auch der Form der Schräge, wird es möglich, die Drosselcharakteristik dieses Drosselelements 62a den entsprechenden Anfordernissen angepasst vorzugeben.

Auch hier ist es grundsätzlich denkbar, nur in einer Stellrichtung, also einer Drehrichtung, die Verstellung durch Druckbeaufschlagung zu erzeugen, und zur Zurückstellung dann ein Vorspannelement, wie z.B. eine Feder, zu nutzen. Die Versorgung der Antriebseinheit 64a mit dem Druckfluid erfolgt beispielsweise über die Drehdurchführung 46, so dass auch hier eine Stellbarkeit der Drosselanordnung 60 von außerhalb der Torsionsschwingungsdämpferanordnung, nämlich durch Übertragung eines Fluiddrucks, gewährleistet ist.

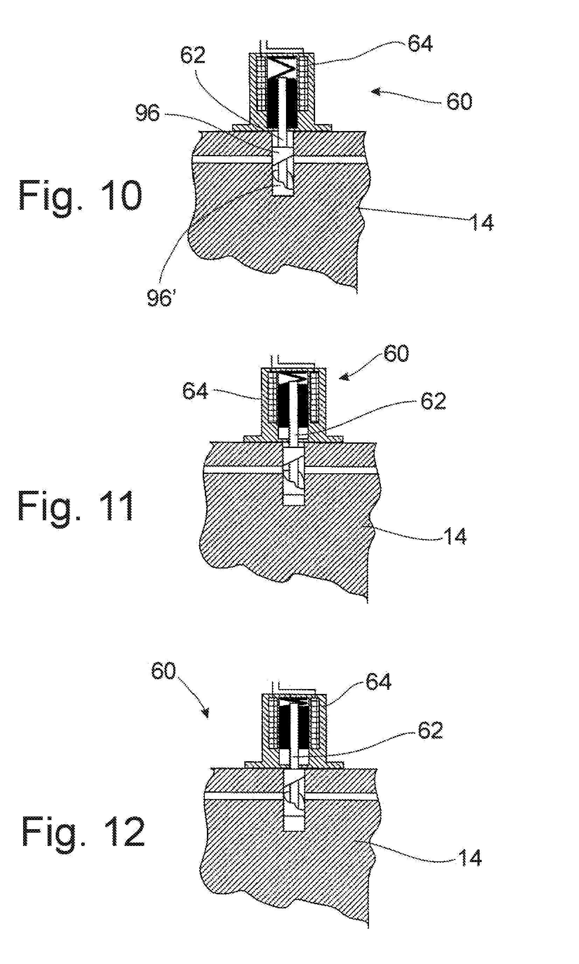

Die Fig. 10 bis 12 zeigen die Ausgestaltung einer Drosseleinheit 60 wieder mit einem in seiner Längsrichtung verschiebbaren Drosselelement 62 und einer diesem zugeordneten, beispielsweise federvorgespannten Antriebseinheit 64. Die Versorgung mit Stellenergie kann so wie mit Bezug auf die Fig. 1 erläutert, also beispielsweise über die Schleifkontaktanordnung 66 erfolgen. Das Ventilelement 62 ist hier mit zwei Kopfbereichen 96, 96' ausgebildet. Je nach Verschiebezustand versperrt der Kopfbereich 96 den Fluidströmungsweg zu einer zugeordneten Gasfedereinheit oder der Kopfbereich 96' oder, wie dies in Fig. 11 erkennbar ist, keiner dieser Kopfbereiche 96, 96' liegt im Strömungsweg, beispielsweise in der jeweils zugeordneten Anschlusskammer, so dass eine involvierte Gasfedereinheit 16 zum Speichern von Energie wirksam sein kann. Auch hier beeinflusst selbstverständlich die Formgebung der beiden Kopfbereiche 96, 96' bzw. deren Abschrägung bzw. die somit gebildeten Steuerkanten das Drosselverhalten der jeweiligen Drosselanordnung 60 bei Verschiebung des Drosselelements 62.

Die Fig. 13 bis 15 zeigen die Ausgestaltung einer Drosseleinheit 60 mit einem verformbaren Drosselelement 62b. Dieses beispielsweise in Form eines Hohlkörpers ausgebildete Drosselelement 62b kann zwischen einem Auflageelement 98 und einem Stößel 100 in einer Öffnung 39 bzw. dem Strömungsweg zu einer zugeordneten Gasfedereinheit 16 liegen. Der Stößel 100 ist verschiebbar und eine Verschiebung desselben nach radial innen führt zu der in den Fig. 14 und 15 erkennbaren Verformung des Drosselelements 62b, welches den Strömungsweg dabei zunehmend abschnürt.

Die Bewegung des Stößels 100 wiederum wird im dargestellten Beispiel erreicht durch ein Bimetallelement 102. Dieses sensiert die Temperatur beispielsweise des ersten Fluids in einer jeweiligen Anschlusskammer. Weist das erste Fluid eine vergleichsweise geringe Temperatur auf, kann das Bimetallelement 102 in der in Fig. 3 gezeigten Positionierung sein, in welcher auch der Strömungsweg zu einer jeweiligen Gasfedereinheit minimal gedrosselt ist. Nimmt die Temperatur des ersten Fluids zu, so verformt sich auch das Bimetallelement 102 der Antriebseinheit 64b und der Strömungsweg zur Gasfedereinheit wird zunehmend abgeschnürt.

Auf diese Weise wird es beispielsweise möglich, dem Zustand Rechnung zu tragen, dass in einem mehr oder weniger stationären Betrieb, in welchem nur geringe Drehmomentschwankungen auftreten, wie dies beispielsweise bei kontinuierlicher Fahrt auf einer Autobahn der Fall sein wird, das erste Fluid entsprechend auch nur gering belastet wird und somit die Torsionsschwingungsdämpferanordnung 10 auf Grund der Wirksamkeit beispielsweise aller Gasfedereinheiten 16 eine sehr weiche Kennung aufweist. In einem Zustand, in welchem häufige Lastwechsel oder starke Drehmomentschwankungen auftreten, beispielsweise im Stadtbetrieb, wird durch die ständige Kompression und Dekompression die Temperatur des ersten Fluids ansteigen, so dass durch die Zunahme der Drosselwirkung die Kennung des Dämpfers auch zunehmend härter wird.

Es sei hier darauf hingewiesen, dass selbstverständlich diese Charakteristik auch umgekehrt werden kann, so dass mit höherer Temperatur eine weichere Kennung erreicht wird, als mit geringerer Temperatur. Selbstverständlich kann das verformbare Drosselelement 62b bzw. dessen Stößel 100 auch in anderer Weise angesteuert werden, beispielsweise durch eine elektromagnetisch wirkende Antriebseinheit, wie sie in Fig. 2 dargestellt ist.

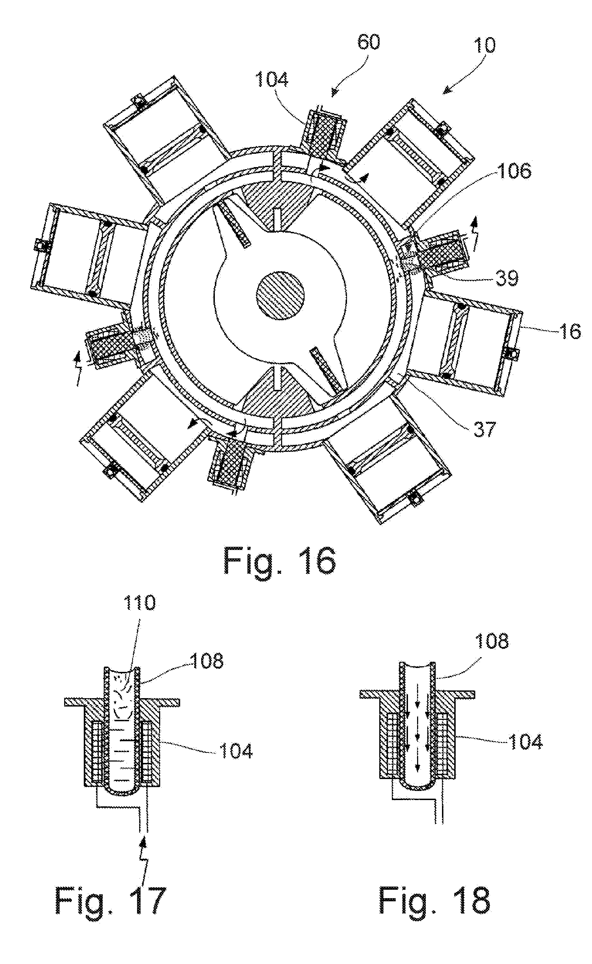

Die Fig. 16 zeigt eine der Fig. 2 entsprechende Darstellung einer Torsionsschwingungsdämpferanordnung 10 im Querschnitt mit vier Drosseleinheiten 60. Diese Drosseleinheiten 60 sind dazu ausgestaltet, bei elektrischer Erregung ein Feld, beispielsweise ein elektrisches oder ein magnetisches Feld zu erzeugen, welches wiederum die Viskosität des ersten Fluids beeinträchtigt. Sind die Drosselanordnungen 60 mit jeweiligen Elektromagnetanordnungen 104 ausgestaltet, die also bei elektrischer Erregung ein Magnetfeld erzeugen, das sich wie bei 106 in der Fig. 16 erkennbar, in den Bereich einer jeweiligen Öffnung 39 auch hineinerstreckt bzw. insbesondere auch innerhalb einer Anschlusskammer 37 liegt, und ist das erste Fluid magneto-rheologisch, so erhöht sich durch das Magnetfeld dessen Viskosität, d.h. die Zähigkeit nimmt zu. Dies bedeutet, dass die Öffnungen 39 durch Zusammenwirkung mit einem nunmehr zäheren ersten Fluid einen größeren Strömungswiderstand bereitstellen und entsprechend die Drosselwirkung zunimmt.

Diese Funktionalität ist in den Fig. 17 und 18 dargestellt. Diese zeigen eine jeweilige Elektromagneteinheit 104, die eine von magneto-rheologischem Fluid durchflossene Leitung 108 umgeben. Die magneto-rheologische Flüssigkeit enthält beispielsweise magnetische oder magnetisierbare Metallpartikel 110. Bei Erregung der Elektromagneteinheit 108 werden diese sich im Bereich des so erzeugten Magnetfeldes ausrichten bzw. bevorzugt ansammeln und somit die Durchströmbarkeit im Bereich des Magnetfels erschweren. Bei nicht erregter Elektromagneteinheit 104, wie dies in Fig. 18 dargestellt ist, kann die magneto-rheologische Flüssigkeit sich im Wesentlichen ungehindert durch die Leitung 108 auch im Bereich der Elektromagneteinheit 104 hindurch bewegen. Um bei dieser Ausgestaltung die Erzeugung des Magnetfelds durch umliegende Komponenten nicht zu beeinträchtigen, sollten die verschiedenen Bauteile, insbesondere das radial äußere Bauteil 20, in welchem diese Drosselanordnungen 60 ausgebildet sind, aus nicht magnetisierbarem Material, wie z.B. Aluminium, aufgebaut sein.

Es sei darauf hingewiesen, dass selbstverständlich auch ein elektro-rheologisches Fluid eingesetzt werden kann, wobei dann die Drosseleinheiten 60 zur Erzeugung eines elektrischen Felds, also beispielsweise das Bereitstellen eines bestimmten elektrischen Potentials, ausgebildet sind.

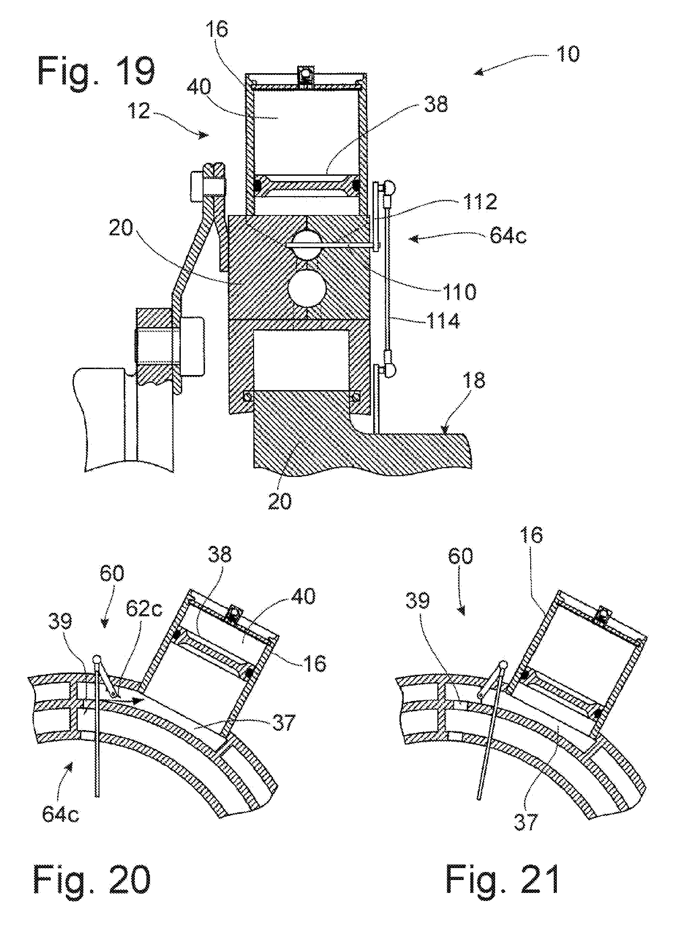

Die Fig. 19 bis 21 zeigen eine Torsionsschwingungsdämpferanordnung 10, bei welcher eine jeweilige Drosselanordnung 60 ein schwenkbares Drosselelement 62c umfasst, hier ausgebildet in Form einer Drosselklappe in einer jeweiligen Anschlusskammer 37. Dem Drosselelement 62c ist eine als Hebeltrieb ausgebildete Antriebseinheit 64c zugeordnet. Diese Antriebseinheit 64c umfasst einen mit einer Schwenkachse 110 des Drosselelements 62c verbundenen Antriebshebel 112 und mit diesem schwenkbar gekoppelt eine Übertragungsstange 114. Diese ist andernends schwenkbar an der Sekundärseite 18 getragen. Bei einer Relativdrehung zwischen der Primärseite 12 und der Sekundärseite 18 wird über diese als Hebeltrieb ausgebildete Antriebseinheit 64 das Drosselelement 62c zwischen der in Fig. 20 dargestellten Freigabestellung und der in Fig. 21 dargestellten Schließstellung verschwenkt und dadurch das Drosselverhalten und somit die Funktionalität einer jeweiligen Gasfedereinheit 16 verstellt.

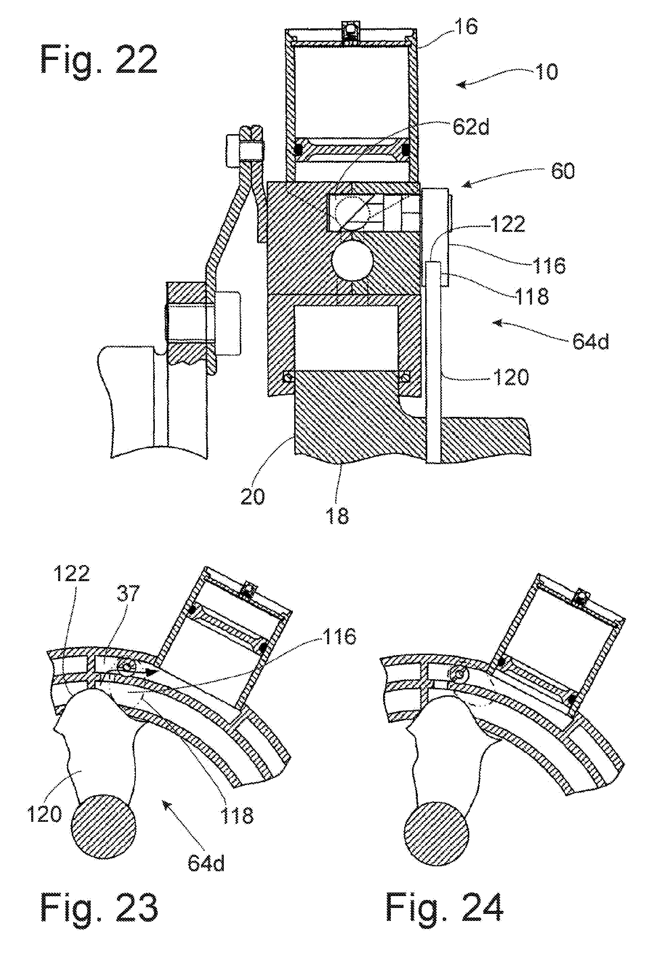

Die Fig. 22 bis 24 zeigen eine Ausgestaltungsvariante einer Torsionsschwingungsdämpferanordnung, bei welcher wiederum ein drehbares Drosselelement 62d einer jeweiligen Drosselanordnung 60 in einer Anschlusskammer 37 vorgesehen ist und somit den Strömungsweg des ersten Fluids zu einer zugeordneten Gasfedereinheit 16 mehr oder weniger stark einschnüren kann. Dem bzw. jedem Drosselelement 62d ist als Antriebseinheit 64d ein Nockentrieb zugeordnet. Dieser umfasst ein mit dem Drosselelement 62d drehbares Nockenelement 116 mit einer Nockenfläche 118. An der Sekundärseite 20 ist ein Gegennockenelement 120 mit einer Gegennockenfläche 122 vorgesehen. Bei Relativdrehung der Primärseite 12 bezüglich der Sekundärseite 18 wirken die Nockenfläche 118 und die Gegennockenfläche 122 zusammen, so dass das Drosselelement 62 die zum Freigeben bzw. mehr oder weniger starken Einschnüren des Strömungswegs zu einer Gasfedereinheit 16 verdreht wird. Hier kann beispielsweise eine Grund-Drehlage eines Drosselements durch ein federartiges und in den Figuren nicht dargestelltes Vorspannelement vorgegeben sein, gegen welches dann das Nockenelement 116 und das Gegennockenelement 120 zum Verdrehen des Drosselelements zusammenwirken.

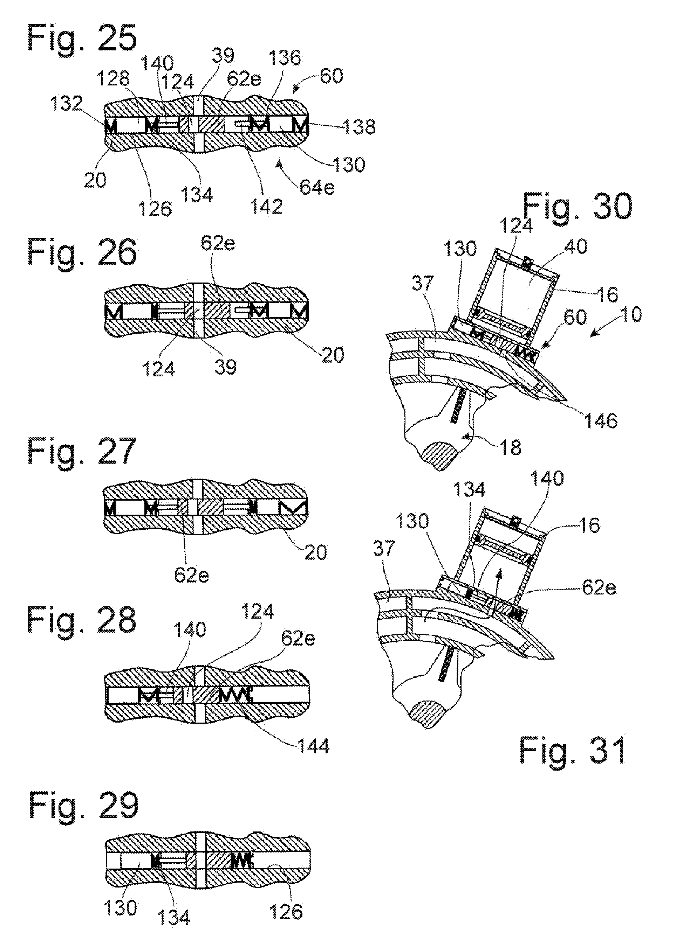

Eine weitere Ausgestaltungsform einer Drosselanordnung 60 ist in den Fig. 25 bis 27 dargestellt. Diese umfasst ein verschiebbares Drosselelement 62e mit einer Drosselöffnung 124, die mehr oder weniger stark in Ausrichtung mit einem zu einer Gasfedereinheit führenden Kanal, beispielsweise bereitgestellt durch eine Öffnung 39, gebracht werden kann. Das Drosselelement 62e ist in einer im Wesentlichen in Umfangsrichtung bzw. tangential dazu verlaufenden Bohrung oder Öffnung 126 aufgenommen. Beidseits des Drosselements 62e sind Antriebsmassen 128, 130 der hier durch Fliehkraftwirkung arbeitenden Antriebseinheit 64e vorgesehen. Jede dieser beiden Antriebsmassen 128, 130 ist zwischen zwei Federn 132, 134 bzw. 136, 138 angeordnet, wobei die Federn 132, 134 bzw. 136, 138 an ihren von den zugeordneten Antriebsmassen 128, 130 entfernten Enden feststehend abgestützt sind und somit die Antriebsmassen 128, 130 zwischen den beiden Federn 132, 134 bzw. 136, 138 hin und her oszillieren können. Jede Antriebsmasse 128, 130 bildet mit den zugeordneten Federn 132, 134, 136, 138 somit ein Schwingungssystem mit einer definierten Resonanzfrequenz.

Ferner erkennt man, dass jede Antriebsmasse 128, 130 einen Antriebsstößel 140, 142 aufweist, über welchen diese auf das verschiebbare Ventilelement 62e einwirken kann. Dieses ist in der Öffnung 126 gegen einen definierten Reibwiderstand bewegbar, so dass es nicht selbst, ausgelöst durch Drehbeschleunigungen verschoben wird, wenn nicht eine der Antriebsmassen 128 oder 130 über den jeweiligen Stößel 140 bzw. 142 auf das Drosselelement 62e einwirkt.

Treten in einem Antriebsstrang Drehmomentschwingungen auf, deren Frequenz im Bereich der Resonanzfrequenz beispielsweise des Schwingungssystems, umfassend die Antriebsmasse 128 und die beiden Federn 132, 134, liegt, so wird die Antriebsmasse 128 verstärkt zur Schwingung angeregt und dabei auf Grund vergleichsweise großer Amplituden mit ihrem Stößel 140 das Ventilelement 62e periodisch belasten und dieses in der Darstellung der Fig. 25 nach rechts verschieben. Im Zuge dieser Schwingung kommt die Öffnung 124 in Ausrichtung beispielsweise mit der Öffnung 39, so dass der Strömungsweg zu einer Gasfedereinheit 16 freigegeben ist. Das andere Schwingungssystem ist auf eine andere Resonanzfrequenz bzw. Anregungsfrequenz abgestimmt und wird daher in diesem Zustand im Wesentlichen nicht angeregt und somit das Drosselelement 62e auch nicht beeinflussen. Bewegt sich jedoch die Schwingungsanregung in einem Antriebsstrang in den Bereich der Resonanzfrequenz des Schwingungssystems, umfassend die Antriebsmasse 130 und die beiden Federn 136, 138, so wird diese Masse 130 nunmehr zu schwingen beginnen, während eine entsprechende Schwingungsanregung beim anderen Schwingungssystem nicht mehr vorhanden sein wird. D.h., das Drosselelement 62e wird, wie in Fig. 27 gezeigt, wieder verschoben werden, so dass der Fluidströmungsweg zu einer Gasfedereinheit verstärkt gedrosselt bzw. abgeschnürt wird.

Durch die Auswahl der Resonsanzfrequenzen der beiden Schwingungssysteme wird es hier also möglich, eine Abstimmung auf verschiedene Schwingungsanregungen in einem Antriebsstrang zu finden und dabei in Abhängigkeit von der Anregungsfrequenz Gasfedereinheiten zu bzw. abzuschalten.

Die Fig. 28 und 29 zeigen eine auch in den Fig. 30 und 31 in einer Torsionsschwingungsdämpferanordnung 10 eingebaute Ausgestaltungsform, bei welcher nur ein Schwingungssystem, nämlich eine Antriebsmasse 130 und eine zugeordnete Feder 134, vorhanden ist, um das Ventilelement 62e hier entgegen der Rückstellkraft einer Rückstellfeder 144 zu beaufschlagen. Die Rückstellfeder 144 verschiebt das Drosselelement 62e grundsätzlich in einen Zustand, in welchem der Strömungsweg zu einer jeweiligen Gasfedereinheit 16 blockiert ist, wie dies auch die Fig. 30 zeigt. Dort erkennt man, dass hier die Drosseleinheit 60 im Übergang von einer Anschlusskammer 37 zu einer Gasfedereinheit 16, also bei einer Öffnung 146 angeordnet ist. Bei dieser Ausgestaltungsform könnte auf die Anschlusskammern 37 völlig verzichtet werden und über die Öffnung 146 dann direkt eine Anbindung an eine jeweilige Verbindungskammer geschaffen werden.

Sind die im Antriebsstrang auftretenden Drehmomentschwankungen in einem Frequenzbereich, der nicht der Resonanzfrequenz des Schwingungssystems mit der Masse 130 und der Feder 134 entspricht, so wird der in Fig. 30 bzw. 28 erkennbare Zustand vorliegen. Ist jedoch die Anregungsfrequenz im Bereich der Resonanzfrequenz des Schwingungsystems, so wird dessen Schwingungsamplitude zunehmen und die Antriebsmasse 130 mit ihrem Stößel 140 periodisch gegen das Drosselelement 62e schlagen. Dieses wird dabei entgegen der Rückstellwirkung der Rückstellfeder 134 in die in Fig. 29 bzw. 31 gezeigte Positionierung verschoben. Da das Drosselelement 62e in der zugeordneten Öffnung 126 entgegen einem vorbestimmten Reibwiderstand verschiebbar ist, wird es sich in der Rückbewegungsphase des Schwingungssystems nicht spontan in die in Fig. 28 gezeigte Positionierung zurückbewegen, so dass durch das periodische Anschlagen der Antriebsmasse 30 gegen das Drosselelement 62e dieses in dem in Fig. 29 bzw. 31 gezeigten Zustand gehalten wird, in welchem beispielsweise eine Anschlusskammer 37 oder eine Verbindungskammer in Verbindung mit einer Gasfedereinheit 16 ist.

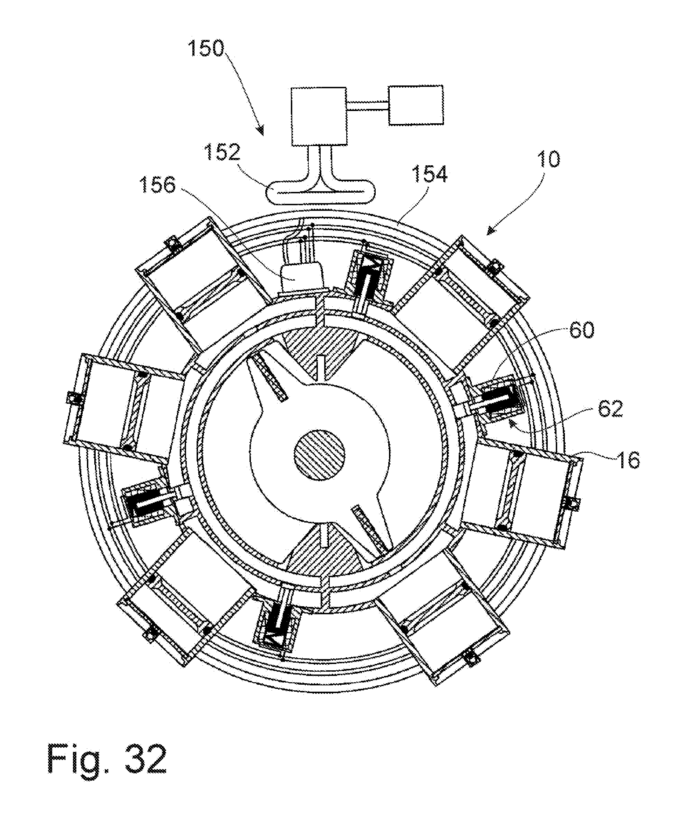

Die Fig. 32 zeigt eine hinsichtlich ihres Aufbaus im Wesentlichen der in Fig. 2 gezeigten entsprechende Torsionsschwingungsdämpferanordnung 10 mit einer Mehrzahl von Drosselanordnungen 60 in Zuordnung zu Gasfedereinheiten 16. Während bei der in Fig. 2 gezeigten Anordnung die Ansteuerung der Drosseleinheiten 60 über die Schleifkontaktanordnung oder Schleifkontaktanordnungen erfolgt, hier also eine ständige Berührung zwischen einem rotierenden und einem nicht rotierenden Systembereich vorhanden ist, ist in der Fig. 32 eine induktive Übertragung von Ansteuersignalen bzw. der Erregungsenergie vorgesehen. Hierzu ist ein Induktionssender 150 mit einer Induktionsantenne 152 beispielsweise in einer Getriebeglocke festgelegt. Die Induktionsantenne gibt elektromagnetische Signale ab, die in einer am Außenumfang der Primärseite 12 der Torsionsschwingungsdämpferanordnung 10 vorgesehene Empfangsantenne 154 aufgenommen werden. Aus dem aufgenommenen elektromagnetischen Signal kann einerseits nach Art eines Transponders die zum Erregen der Drosselanordnungen 60 bzw. deren Antriebseinheiten 64 erforderliche elektrische Energie abgegriffen werden. Gleichzeitig können Ansteuersignale herausgefiltert werden, welche in einer Steuereinheit 156 dazu genutzt werden, die jeweils angesprochenen bzw. anzusteuernden Antriebseinheiten 64 zu erregen bzw. zu entregen. Man erkennt dabei in der Fig. 32 eine Ausgestaltungsform, bei welcher jeweils zwei der dargestellten Drosseleinheiten 60 parallel und entkoppelt von den anderen beiden Drosseleinheiten 60 angesteuert werden können.

Die zu der Ansteuereinheit 56 übertragenen Signale können kodiert sein, um auf diese Art und Weise die Information, welche der Antriebseinheiten 64 zu erregen sind, zu übertragen. Auch können grundsätzlich in Zuordnung zu den getrennt voneinander ansteuerbaren Antriebseinheiten 64 mehrere Empfangsantennen vorgesehen sein, um beispielsweise mit Übertragungssignalen in verschieden Frequenzenbereichen zu arbeiten.

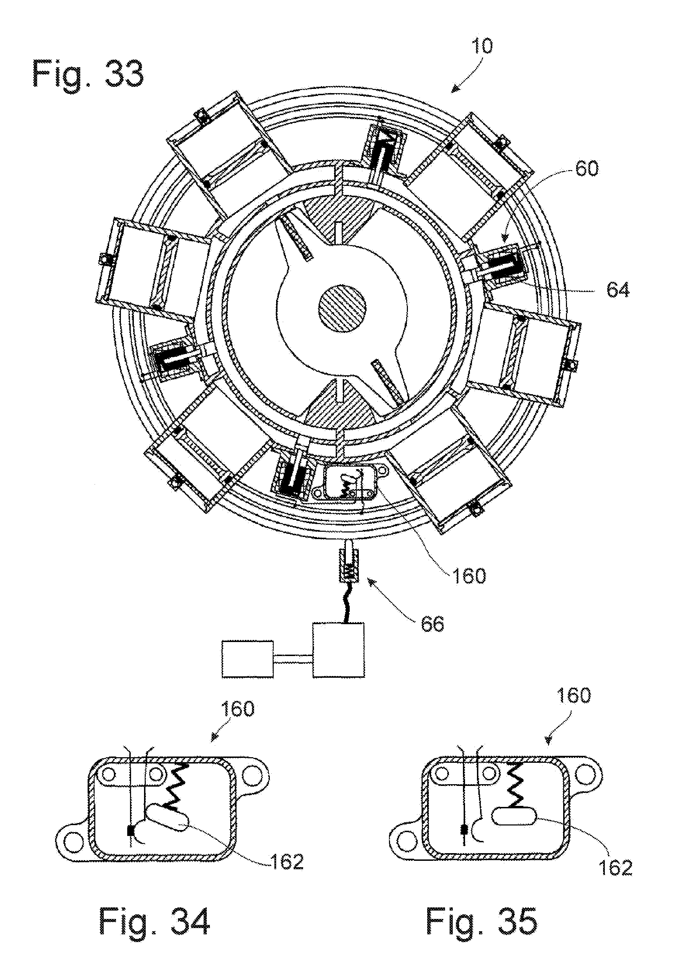

Die Fig. 33 zeigt eine Ausgestaltungsvariante, bei welcher grundsätzlich der Aufbau wieder dem vorangehend mit Bezug auf die Fig. 2 beschriebenen entspricht. Die elektromagnetisch wirksamen Antriebseinheiten 64 der Drosselanordnungen 60 werden über eine bzw. mehrere Schleifkontaktanordnungen 66 mit elektrischer Energie versorgt. Es ist jedoch in Zuordnung zu einzelnen, zu Gruppen oder allen Drosselanordnungen 60 jeweils ein Trägheitsschalter 160 vorgesehen. Dieser weist eine schwingende Masse 162 auf, die bei entsprechender starker Auslenkung, wie dies in Fig. 34 gezeigt ist, den Kontakt innerhalb des Trägheitsschalters 160 schließt und somit eine mit diesem gekoppelte Antriebseinheit 64 erregt. Bei nicht vorhandener Auslenkung der Trägheitsmasse 162 ist der Kontakt offen und die entsprechende Antriebseinheit 62 nicht erregt.

Hier ist also eine Anordnung gezeigt, bei welcher in Abhängigkeit von der Drehbeschleunigung eine Aktivierung der Antriebseinheiten 64 bzw. entsprechend auch eine Zuschaltung oder Abschaltung der Gasfedereinheiten 16 erfolgen kann. Auch hier könnte die Auslegung wieder derart sein, dass dann, wenn das durch die Trägheitsmasse 162 im Wesentlichen gebildete Schwingungssystem in einem Resonanzfrequenzbereich arbeitet, also eine periodische Erregung der Antriebseinheiten 64 erfolgt, diese durch entsprechende Reibungsführung eines jeweiligen Drosselelements 62 in einem entsprechenden Stellzustand verbleiben.

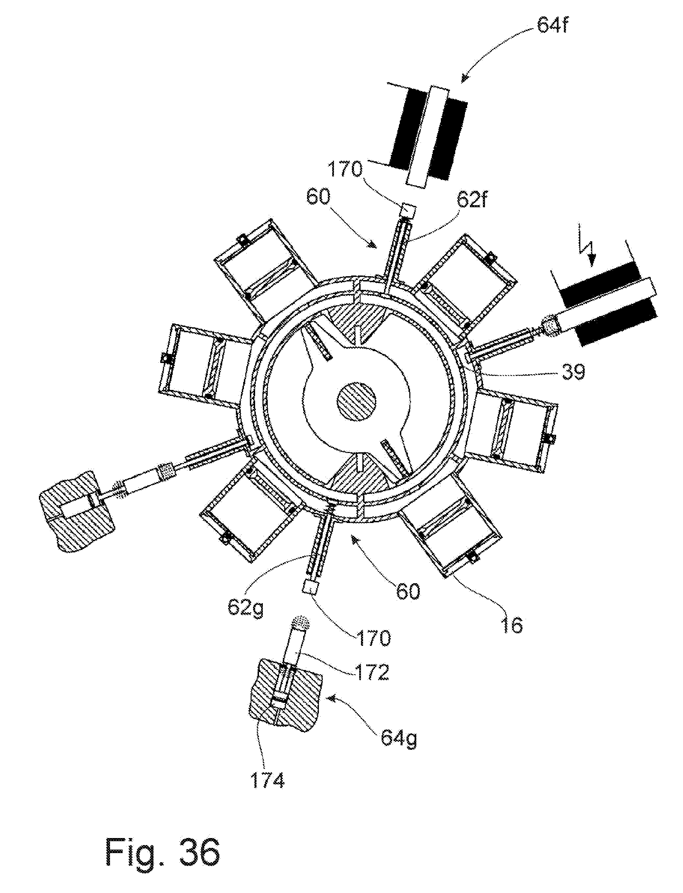

Die Fig. 36 zeigt eine Torsionsschwingungsdämpferanordnung 10 mit ihren sternförmig angeordneten Gasfedereinheiten 16 und einigen davon zugeordnet wieder Drosselanordnungen 60. Diese umfassen verschiebbare Drosselelemente 62f bzw. 62g, die beispielsweise, wie in Fig. 36 unten und oben erkennbar, in eine die zugehörige Öffnung 39 abschließende Positionierung vorgespannt sind. An ihrem radial äußeren Bereich tragen de Drosselelemente 62f, 62g Magnet-Wechselwirkungsbereiche 170. Diese bewegen sich bei Rotation der Torsionsschwingungsdämpferanordnung 10 periodisch an beispielsweise im Bereich einer Getriebeglocke festgelegten Antriebseinheiten 64f bzw. bei einer anderen Ausgestaltungsart 64g vorbei.

Bei der Ausgestaltungsform in Fig. 36 rechts oben wirken die Antriebseinheiten 64f elektromagnetisch, erzeugen also bei Erregung ein Magnetfeld, das bei Vorbeibewegung die Magnetwechselwirkungsbereiche 170 anzieht, mithin also die zugeordneten Drosselelemente 62f nach radial außen zieht. Diese sind entgegen einer bestimmten Reibkraft in ihre Schließstellung vorgespannt, so dass zwischen den Zeitphasen, in welchen die Magnetwechselwirkungsbereiche 170 sich an derartigen Antriebseinheiten 64f vorbeibewegen, die Drosselelemente 62f nicht in ihre Schließstellung gelangen können. Erst dann, wenn die Antriebseinheiten 64f nicht mehr erregt werden, mithin kein Magnetfeld die Drosselelemente 62f nach radial außen zieht, gelangen sie in ihre Schließstellung und koppeln die zugehörigen Gasfedereinheiten 16 ab.

Bei der in der Fig. 36 links unten gezeigten Ausgestaltung umfassen die Antriebseinheiten 64g Permanentmagnete 172, die beispielsweise gesteuert durch einen Fluiddruck in Fluidbetätigungseinheiten 174 radial verschoben werden können. Sind die Permanentmagnete 172 nach radial außen zurückgezogen, ist die magnetische Wechselwirkung mit den Magnetwechselwirkungsbereichen 170 zu schwach, um die Drosselelemente 62g nach radial außen ziehen zu können. Sind jedoch die Permanentmagnete 172 nach radial innen verlagert, ist bei der periodischen Vorbeibewegung der Abstand zwischen diesen Permanentmagneten 172 und den Magnetwechselwirkungsbereichen 170 so gering, dass die Drosselelemente 62g nach radial außen gezogen werden und damit die zugeordneten Öffnungen 39 freigeben.

Es sei hier darauf hingewiesen, dass selbstverständlich die Funktionalität hier umgekehrt werden kann, dass durch Antriebseinheiten 64f bzw. 64g die jeweiligen Drosselelemente nach radial innen belastet werden können, so dass hier ein Wechselspiel zwischen der nach radial innen belastenden Wirkung der Antriebseinheiten und der nach radial außen belastenden Fliehkraft genutzt werden kann, um ein Umschalten zu erzielen. Auch ist es selbstverständlich, dass die Zuordnung zwischen einer Offen- und einer Geschlossenstellung und der Positionierung eines Drosselelements radial außen oder radial innen entsprechend vertauscht sein kann.

Vorangehend sind verschiedenste Ausgestaltungsformen gezeigt und beschrieben worden, bei welchen in einer Gasfeder-Torsionsschwingungsdämpferanordnung 10 einzelne oder mehrere Gasfedereinheiten, die hier als Energiespeicher bzw. Druckspeicher des Drucks des ersten Fluids wirken, zu- bzw. abgekoppelt werden können, um deren Funktionalität als Energiespeicher nutzen oder nicht nutzen zu können. Es sei darauf hingewiesen, dass die Anzahl der beispielsweise für den Zugzustand oder den Schubzustand wirksamen Gasfedereinheiten entsprechend den in einem Antriebsstrang bestehenden Anforderungen ausgewählt werden kann, ebenso wie die Anzahl der dann jeweils zu- bzw. abschaltbaren Gasfedereinheiten.

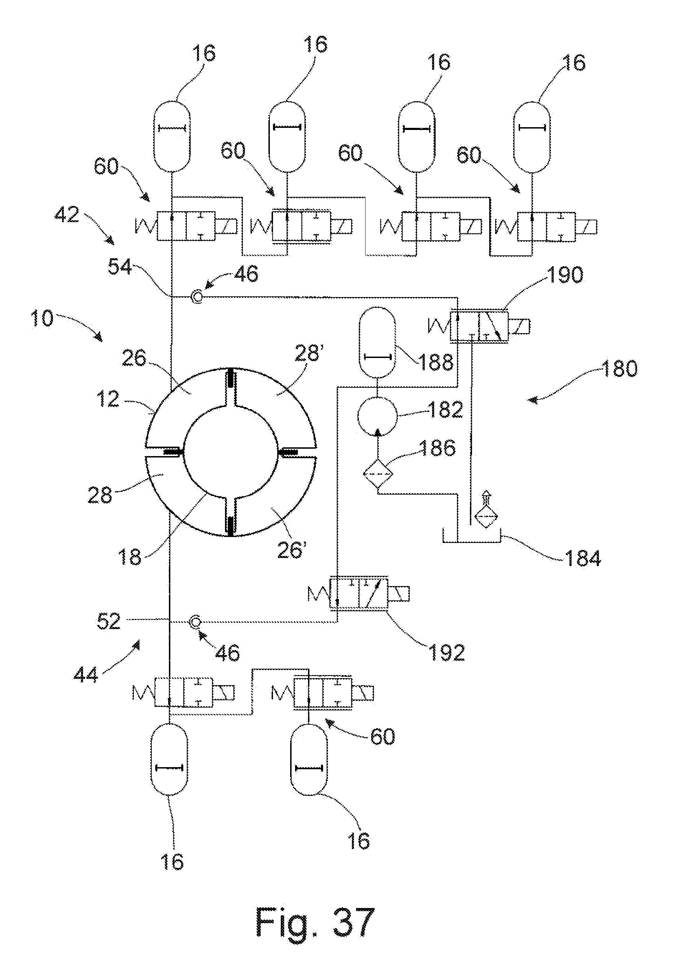

Die Fig. 37 zeigt beispielhaft eine derartige Torsionsschwingungsdämpferanordnung 10, bei welcher in Zuordnung zu den zugseitig wirksamen Druckkammern 26, 26' vier Gasfedereinheiten 16 vorgesehen sind und in Zuordnung zu den schubseitig wirksamen Druckkammern 28, 28' beispielsweise zwei Gasfedereinheiten vorgesehen sind. Man erkennt weiter eine allgemein mit 180 bezeichnete Quelle für unter Druck stehendes erstes Fluid mit einer Fluidpumpe 182, die aus einem drucklosen Reservoir 184 Fluid über einen Filter 186 entnimmt und damit beispielsweise einen Druckspeicher 188 speist. Es sind zwei schaltbare Ventilanordnungen 190, 192 vorgesehen, über welche die beiden Fluiddruckspeicheranordnungen 42, 44 bzw. deren Druckkammern, Verbindungskammern und auch Anschlusskammern in Verbindung entweder mit dem Druckspeicher 188 oder dem im Wesentlichen drucklosen Reservoir 184 gebracht werden können. Hier könnte selbstverständlich eine weitere Stellung dieser Ventile 190, 192 vorgesehen sein, in welcher diese den Strömungsweg vollständig absperren und somit die zugeordneten Fluiddruckspeicheranordnungen 42, 44 sowohl von dem Druckspeicher 188 als auch vom Reservoir 184 entkoppeln.

Weiter erkennt man, dass bei den jeweiligen Gasfedereinheiten 16 und den diesen zugeordneten Drosseleinheiten, hier wieder dargestellt anhand schaltbarer Ventile 60 , eine serielle Schaltung besteht. Dies bedeutet, dass dann, wenn beispielsweise bei den zugseitig wirksamen und in Fig. 37 oben dargestellten Gasfedereinheiten 16 die Drosselanordnung 60 der auf die Druckkammern 26, 26' als erstes folgenden Gasfedereinheit 16 im Schließzustand ist, also diese Gasfedereinheit 16 abgekoppelt ist, auch alle anderen Gasfedereinheiten 16 abgekoppelt sind, und zwar unabhängig davon, in welchem Stellzustand ihre Drosselanordnungen 60 sind. Entsprechendes ist hier auch auf der Schubseite realisiert.

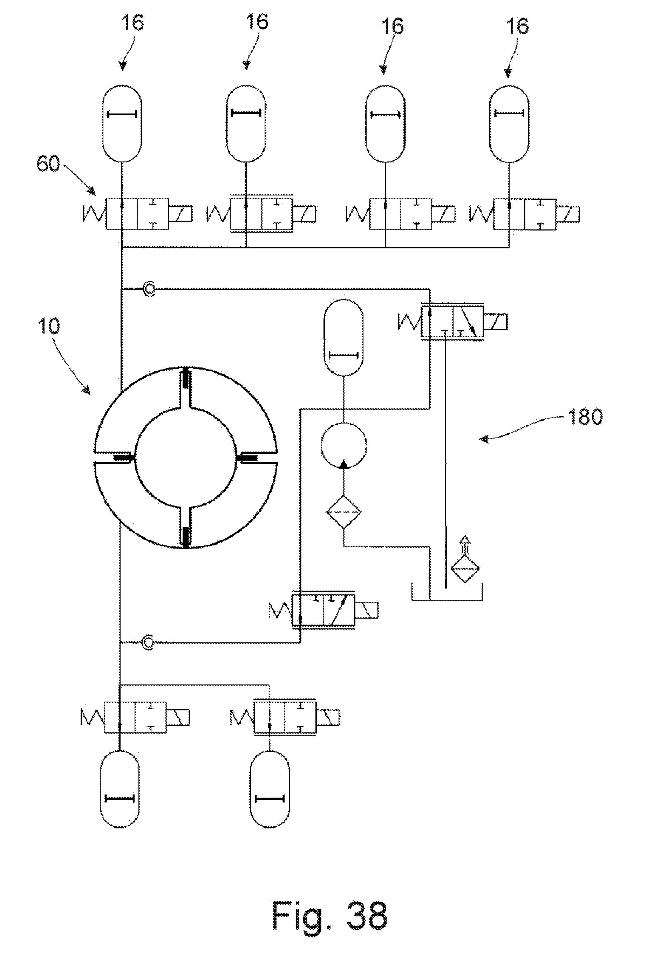

Im Gegensatz dazu zeigt die Fig. 38 eine Anordnung, bei welcher die jeweiligen schubseitig bzw. zugseitig wirksamen Gasfedereinheiten 16 über die diesen zugeordneten Drosselanordnungen 60 parallel wirken, also jede dieser Gasfedereinheiten 16 für sich alleine oder in Kombination mit einer beliebigen anderen wirksam sein kann. Die in Fig. 38 gezeigte Anordnung entspricht letztendlich auch derjenigen, wie sie beispielsweise in Fig. 2 gezeigt ist, wo die einzelnen zu- bzw. abschaltbaren Gasfedereinheiten parallel zueinander und jeweils unabhängig davon, wie die anderen geschaltet sind, aktivierbar bzw. deaktivierbar sind.

Die in Fig. 37 gezeigte Anordnung kann beispielsweise dadurch realisiert sein, dass in einen Verbindungsweg zwischen einer jeweiligen Drosselanordnung 60 und einer Gasfedereinheit 16 ein Strömungsweg einmündet, der die Anbindung an die nächst folgende Gasfedereinheit 16 bzw. deren Drosselanordnung 60 realisiert.

Abschließend sei darauf hingewiesen, dass selbstverständlich auch eine Kombination von parallel und seriell geschalteten Gasfedereinheiten 16 realisiert sein kann, bei der beispielsweise zwei parallel geschaltete Gasfedereinheiten dann seriell geschaltet sind zu einer oder mehreren vorangehenden Gasfedereinheiten. Dies symbolisiert in der Fig. 38 bei den zugseitig wirksamen Gasfedereinheiten eine strichlierte Verbindung zwischen den beiden mittleren Gasfedereinheiten 16.

## Patentansprüche

1. Torsionsschwingungsdämpferanordnung, insbesondere für den Antriebsstrang eines Fahrzeugs, umfassend eine Primärseite (12) und eine gegen die Wirkung einer Dämpferanordnung bezüglich der Primärseite (12) um eine Drehachse (A) drehbare Sekundärseite (18), wobei die Dämpferanordnung wenigstens eine Fluiddruckspeicheranordnung (42, 44) sowie eine Förderanordnung (15) umfasst, durch welche bei Relativdrehung der Primärseite (12) bezüglich der Sekundärseite (18) der Fluidspeicherdruck in wenigstens einer Fluiddruckspeicheranordnung (42, 44) erhöhbar ist, wobei die wenigstens eine Fluiddruckspeicheranordnung an einer Seite von Primärseite (12) und Sekundärseite (18) wenigstens eine Fluiddruckspeichereinheit mit durch die Förderanordnung (15) förderbarem erstem Fluid und einem durch das erste Fluid belastbaren Energiespeicher (16) umfasst, wobei in einem Strömungsweg des ersten Fluids zu wenigstens einem Energiespeicher (16) eine Drosselanordnung (60) mit veränderbarem Drosselverhalten vorgesehen ist.

2. Torsionsschwingungsdämpferanordnung nach Anspruch 1,
**dadurch gekennzeichnet, dass** wenigstens eine Fluiddruckspeicheranordnung (42, 44) eine Mehrzahl von Energiespeichern (16) mit diesen zugeordneten Drosselanordnungen (60) aufweist und dass die Energiespeicher (16) durch die zugeordneten Drosselanordnungen (60) parallel schaltbar sind.

3. Torsionsschwingungsdämpferanordnung nach Anspruch 1 oder 2,
**dadurch gekennzeichnet, dass** wenigstens eine Fluiddruckspeicheranordnung (42, 44) eine Mehrzahl von Energiespeichern (16) mit diesen zugeordneten Drosselanordnungen (60) aufweist und dass die Energiespeicher (16) durch die zugeordneten Drosselanordnungen (60) seriell schaltbar sind.

4. Torsionsschwingungsdämpferanordnung nach einem der Ansprüche 1 bis 3,
**dadurch gekennzeichnet, dass** wenigstens eine Drosselanordnung (60) ein durch eine Antriebseinheit (64) stellbares Drosselelement (62) umfasst.

5. Torsionsschwingungsdämpferanordnung nach Anspruch 4,
**dadurch gekennzeichnet, dass** das Drosselelement (62; 62f, 62g) durch die zugeordnete Antriebseinheit (64; 64f; 64g) verschiebbar ist.

6. Torsionsschwingungsdämpferanordnung nach Anspruch 4,
**dadurch gekennzeichnet, dass** das Drosselelement (62a; 62c; 62d) durch die zugeordnete Antriebseinheit (64a; 64c; 64d) drehbar ist.

7. Torsionsschwingungsdämpferanordnung nach Anspruch 4,
**dadurch gekennzeichnet, dass** das Drosselelement (62b) durch die zugeordnete Antriebseinheit (64b) verformbar ist.

8. Torsionsschwingungsdämpferanordnung nach einem der Ansprüche 4 bis 7,
**dadurch gekennzeichnet, dass** wenigstens eine Antriebseinheit (64) durch elektrische oder/und magnetische Wechselwirkung zum Stellen des Drosselelements (62) wirkt.

9. Torsionsschwingungsdämpferanordnung nach Anspruch 8,
**dadurch gekennzeichnet, dass** wenigstens eine Antriebseinheit (64) in Zuordnung zu einer Drosselanordnung (60) an der einen Seite von Primärseite (12) und Sekundärseite (18) eine Elektromagnetanordnung umfasst.

10. Torsionsschwingungsdämpferanordnung nach Anspruch 9,
**dadurch gekennzeichnet, dass** wenigstens eine Antriebseinheit (64) durch Schleifkontakt oder Induktion mit Antriebssignalen oder/und elektrischer Antriebsenergie versorgbar ist.

11. Torsionsschwingungsdämpferanordnung nach Anspruch 8,
**dadurch gekennzeichnet, dass** wenigstens eine Antriebseinheit (64f; 64g) einen in einem nicht rotierenden Systembereich angeordnet ist und zur Erzeugung einer magnetischen oder/und elektrischen Wechselwirkung mit einem Wechselwirkungsbereich (170) von einer oder mehreren Drosselanordnungen (60) ausgebildet ist.

12. Torsionsschwingungsdämpferanordnung nach Anspruch 11,
**dadurch gekennzeichnet, dass** wenigstens eine Antriebseinheit (64f) wenigstens eine Elektromagnetanordnung umfasst.

13. Torsionsschwingungsdämpferanordnung nach Anspruch 11 oder 12,
**dadurch gekennzeichnet, dass** wenigstens eine Antriebseinheit (64g) wenigstens einen zur Erzeugung einer magnetischen Wechselwirkung vorzugsweise verlagerbaren Permanentmagneten (172) umfasst.

14. Torsionsschwingungsdämpferanordnung nach einem der Ansprüche 4 bis 7,
**dadurch gekennzeichnet, dass** wenigstens eine Antriebseinheit (64c; 64d) einen eine Antriebskraft aus einer Relativdrehung zwischen der Primärseite (12) und der Sekundärseite (18) ableitenden mechanischen Antrieb (112, 114; 116, 120) umfasst.

15. Torsionsschwingungsdämpferanordnung nach Anspruch 14,
**dadurch gekennzeichnet, dass** der mechanische Antrieb (116, 120) als Nockentrieb ausgebildet ist.

16. Torsionsschwingungsdämpferanordnung nach Anspruch 14,
**dadurch gekennzeichnet, dass** der mechanische Antrieb (112, 114) als Hebeltrieb ausgebildet ist.

17. Torsionsschwingungsdämpferanordnung nach einem der Ansprüche 4 bis 16,
**dadurch gekennzeichnet, dass** wenigstens eine Antriebseinheit (64a) als Druckfluidantrieb ausgebildet ist.

18. Torsionsschwingungsdämpferanordnung nach einem der Ansprüche 4 bis 17,
**dadurch gekennzeichnet, dass** wenigstens eine Antriebseinheit (64b) ein in Abhängigkeit von einer Temperatur des ersten Fluids verformbares Bimetallantriebselement (102) umfasst.

19. Torsionsschwingungsdämpferanordnung nach einem der Ansprüche 1 bis 18,
**dadurch gekennzeichnet, dass** das erste Fluid magneto-rheologisch oder/und elektro-rheologisch ist und dass wenigstens eine Drosselanordnung (60) eine Vorrichtung (104) zur Erzeugung eines elektrischen Feldes oder/und magnetischen Feldes im Strömungsweg des ersten Fluids umfasst.

20. Torsionsschwingungsdämpfer nach einem der Ansprüche 1 bis 19,
**dadurch gekennzeichnet, dass** wenigstens eine Drosselanordnung (60) ein in Abhängigkeit von einer Drehbeschleunigung der Primärseite (12) oder/und der Sekundärseite (18) stellbares Drosselelement (62c; 62d; 62e) umfasst.

21. Torsionsschwingungsdämpfer nach Anspruch 20,
**dadurch gekennzeichnet, dass** dem Drosselelement (62e) eine dieses in wenigstens einer Stellrichtung periodisch beaufschlagende Antriebseinheit (64e) zugeordnet ist.

22. Torsionsschwingungsdämpfer nach Anspruch 21,
**dadurch gekennzeichnet, dass** die Antriebseinheit (64e) wenigstens ein näherungsweise in einer Umfangsrichtung entgegen einer Rückstellkraft bewegbares Antriebsmassenelement (128, 130) umfasst.

23. Torsionsschwingungsdämpferanordnung nach einem der Ansprüche 1 bis 22,
**dadurch gekennzeichnet, dass** wenigstens ein Energiespeicher (16) komprimierbares zweites Fluid, vorzugsweise Gas, in einem Speichervolumen (40) umfasst.

24. Torsionsschwingungsdämpferanordnung nach einem der Ansprüche 1 bis 23,
**dadurch gekennzeichnet, dass** zwei Fluiddruckspeicheranordnungen (42, 44) vorgesehen sind und dass bei Relativdrehung der Primärseite (12) bezüglich der Sekundärseite (18) in einer ersten Relativdrehrichtung die Förderanordnung (15) den Fluidspeicherdruck in einer ersten der Fluiddruckspeicheranordnung (42, 44) erhöht und bei Relativdrehung der Primärseite (12) bezüglich der Sekundärseite (18) in einer der ersten Relativdrehrichtung entgegengesetzten zweiten Relativdrehrichtung den Fluidspeicherdruck in einer zweiten der Fluiddruckspeicheranordnungen (42, 44) erhöht.

25. Torsionsschwingungsdämpferanordnung nach Anspruch 24,
**dadurch gekennzeichnet, dass** die Förderanordnung (15) eine durch Relativdrehung der Primärseite (12) bezüglich der Sekundärseite (18) antreibbare Pumpanordnung umfasst, welche in Abhängigkeit von der Relativdrehrichtung erstes Fluid von einer der Fluiddruckspeicheranordnungen (42, 44) zur anderen Fluiddruckspeicheranordnung (42, 44) fördert.

26. Torsionsschwingungsdämpferanordnung nach einem der Ansprüche 1 bis 24,
**dadurch gekennzeichnet, dass** die Förderanordnung (15) wenigstens eine zwischen der Primärseite (12) und der Sekundärseite (18) gebildete Druckkammer (26, 26', 28, 28') umfasst, deren Volumen bei Relativdrehung der Primärseite (12) bezüglich der Sekundärseite (18) veränderbar ist, sowie wenigstens ein Verbindungsvolumen (32, 32', 34, 34') umfasst, über welches aus der wenigstens einen Druckkammer (26, 26', 28, 28') verdrängtes erstes Fluid wenigstens einen Energiespeicher (16) belastet.
